(19) **Europäisches Patentamt / European Patent Office / Office européen des brevets**

(11) **EP 3 146 367 B1**

(12) **FASCICULE DE BREVET EUROPEEN**

(45) Date de publication et mention de la délivrance du brevet:
**04.07.2018 Bulletin 2018/27**

(51) Int Cl.:
***G01V 99/00*** [(2009.01)]

(21) Numéro de dépôt: **15728066.0**

(22) Date de dépôt: **19.05.2015**

(86) Numéro de dépôt international:
**PCT/FR2015/051309**

(87) Numéro de publication internationale:
**WO 2015/177455 (26.11.2015 Gazette 2015/47)**

(54) **PROCÉDÉ DE DÉTERMINATION D'UNE CARTE DE HAUTEUR D'HYDROCARBURE LIQUIDE DANS UN RÉSERVOIR**

VERFAHREN ZUR BESTIMMUNG EINER KARTE DER HÖHE VON FLÜSSIGEM KOHLENWASSERSTOFF IN EINEM BEHÄLTER

METHOD OF DETERMINING A MAP OF HEIGHT OF LIQUID HYDROCARBON IN A RESERVOIR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.05.2014 FR 1454477**

(43) Date de publication de la demande:
**29.03.2017 Bulletin 2017/13**

(73) Titulaire: **Total SA**
**92400 Courbevoie (FR)**

(72) Inventeurs:
- **AHN, Sung-Bin**
  **75005 Paris (FR)**
- **SCHIRMER, Patrice**
  **92700 Colombes (FR)**
- **TAWILE, Eric**
  **92400 Courbevoie (FR)**

(74) Mandataire: **Cabinet Plasseraud**
**66, rue de la Chaussée d'Antin**
**75440 Paris Cedex 09 (FR)**

(56) Documents cités:
**FR-A1- 2 926 379** **US-A1- 2006 052 938**
**US-A1- 2011 231 164**

- **T. CHARLES ET AL: "Experience with the Quantification of Subsurface Uncertainties", SPE ASIA PACIFIC OIL AND GAS CONFERENCE AND EXHIBITION, 17-19 APRIL 2001, JAKARTA, INDONESIA, 1 décembre 2001 (2001-12-01), pages 1-10, XP055071048, DOI: 10.2118/68703-MS ISBN: 978-1-55-563920-4**
- **Amisha Maharaja: "Global net-to-gross uncertainty assessment at reservoir appraisal stage", , 1 juin 2007 (2007-06-01), XP055161516, Extrait de l'Internet: URL:http://ddod.riss.kr/ddodservice/search /viewDetailThesisInfoForm.jsp?p_no=1142048 2&p_abstract_yn=Y&p_toc_yn=N&p_fulltext_ki nd=002&p_search=&p_k2dockey [extrait le 2015-01-12]**

**Description**

La présente invention concerne le domaine de la détermination des réserves en hydrocarbures liquides dans un réservoir et, notamment, le domaine de la détermination de cartes de hauteur d'hydrocarbure liquide dans un réservoir.

Afin de déterminer facilement les réserves en hydrocarbures (gaz, pétrole ou huiles) des réservoirs en exploitation ou à exploiter, les géologues manipulent et étudient le plus souvent des cartes en deux dimensions représentant le « HuPhiSo » (dites cartes « HuPhiSo »). En effet, ces cartes sont synthétiques et renseignent rapidement le géologue quant à la valeur économique du réservoir (3D).

Pour un volume rocheux en trois dimensions, la carte « HuPhiSo » (en deux dimensions) comprend une pluralité de valeurs, chaque valeur étant le produit de plusieurs paramètres :

$$HuPhiSo = h \cdot NTG \cdot \varphi \cdot So$$

le paramètre h étant la hauteur de la colonne (selon l'axe $\vec{z}$ si la carte est selon le plan $(\vec{x},\vec{y})$), le paramètre NTG (ou « Net to Gross » en anglais) étant la fraction du volume rocheux favorable à la présence d'hydrocarbures, le paramètre $\varphi$ étant la porosité de la roche et le paramètre So étant la saturation en huile des porosités.

Ainsi, si V est le volume rocheux considéré, $V \cdot NTG \cdot Phi \cdot So$ est le volume d'huile contenue dans le volume rocheux. Une valeur « HuPhiSo » représente la « hauteur de colonne d'huile » dans une colonne considérée. Pour autant, cette valeur est reliée indirectement au volume de l'huile et peut représenter la « densité surfacique d'huile ».

Pour un modèle maillé en cellules parallélépipédiques, il est possible de calculer une valeur « HuPhiSo » pour la carte finale en sommant la valeur « HuPhiSo » de chaque cellule d'une colonne de ce modèle.

Bien entendu, la détermination des valeurs « HuPhiSo » peut être simple si les paramètres h, NTG, Phi et So sont connues de manière certaine pour tout point/cellule du modèle. Néanmoins, en pratique, ces paramètres ne sont parfaitement connus qu'en quelques points isolés : les points des puits de forage. Bien entendu, il est possible de simuler ces paramètres pour les autres cellules grâce au croisement de diverses analyses de données (ex. sismiques) et de l'utilisation d'algorithmes de simulation stochastique basés sur des méthodes géostatistiques afin de « compléter » le modèle. A cela s'ajoute la distribution naturelle des propriétés pétro-physiques (impédance acoustique, porosité effectives, porosité des roches dans le NTG, etc.). Chaque grandeur physique peut donc être considérée comme une variable aléatoire, éventuellement non stationnaire (ex. la porosité diminue le plus souvent avec la profondeur).

Il existe un grand nombre d'incertitudes qui pèsent sur les différents paramètres dont dépend la carte de HuPhiSo, de sorte que cette dernière peut varier considérablement d'une carte possible à une autre.

Pour les prises de décision, les ingénieurs réservoir apprécient particulièrement les cartes d'espérance du HuPhiSo et les cartes d'écart-type (ou de variance) autour de l'espérance du HuPhiSo.

Habituellement, ces cartes sont obtenues en simulant un grand nombre de cartes HuPhiSo. Pour chaque cellule de la carte, est alors calculée une moyenne et une variance en fonction de cellules correspondantes dans les cartes HuPhiSo simulées.

Néanmoins, chaque simulation peut être coûteuse en ressources et en temps de calcul et il n'est pas rare que la détermination des cartes d'espérance et d'écart-type prenne plusieurs centaines d'heures.

Le document T. Charles et al "Expérience with the Quantification of Subsurface Uncertainties", SPE Asia Pacific Oil and Gas Conférence and Exhibition, 17-19 Avril 2001, présente l'élaboration d'un modèle de propriétés pétrochimiques prenant en compte les incertitudes d'une formation souterraine.

Il existe donc un besoin pour la détermination de carte de HuPhiSo moyen (espérance) et/ou de l'intervalle d'incertitudes correspondant à cette carte (variance ou écart-type) de manière plus rapide, sans réaliser un grand nombre de simulations de cartes HuPhiSo.

La présente invention vient améliorer la situation.

A cet effet, la présente invention propose une méthode analytique permettant, après certaines simplifications, de déterminer directement l'espérance de la hauteur d'hydrocarbure liquide dans un modèle géologique.

La présente invention vise alors un procédé de détermination d'une carte d'espérance de hauteur d'hydrocarbure liquide dans un modèle géologique, le modèle géologique comportant des mailles pouvant être chacune associée à un faciès parmi une pluralité de faciès et à un élément architectural parmi une pluralité d'éléments architecturaux.

Le procédé comporte, pour au moins une colonne du modèle géologique :

/a/ réception d'un cube de répartitions pour chaque élément architectural AE parmi la pluralité d'éléments architecturaux, le cube de répartitions décrivant pour chaque maille c du modèle la probabilité $p_{AE}(c)$ que ladite maille appartienne audit élément architectural,

/b/ réception d'un cube de proportions pour chaque faciès parmi la pluralité de faciès et pour chaque élément architectural parmi la pluralité d'éléments architecturaux, le cube de proportions associé à un faciès A et à un élément architectural AE décrivant pour chaque maille c du modèle la proportion dudit faciès dans ladite maille si ladite maille appartient audit élément architectural AE, ladite proportion étant une variable aléatoire de distribution triangulaire définie par une valeur minimale $p_{A,AE,min}(c)$, une valeur maximale $p_{A,AE,max}(c)$, et un mode $p_{A,AE,mode}(c)$,

/c/ détermination, pour chaque maille c de ladite colonne et pour chaque faciès A de la pluralité de faciès, de la somme sur la pluralité d'éléments architecturaux de

$$p_{AE}(c).\frac{1}{3}\Big(p_{A,AE,min}(c) + p_{A,AE,max}(c) + p_{A,AE,mode}(c)\Big).$$

/d/ détermination d'une valeur d'espérance de hauteur d'hydrocarbure liquide pour ladite colonne de manière analytique en fonction de la somme déterminée à l'étape /c/ pour chaque maille c de ladite colonne et pour chaque faciès A.

Normalement, l'espérance de la valeur HuPhiSo est très difficile à calculer directement $Esp(HuPhiSo) = Esp(h \cdot NTG \cdot \varphi \cdot So)$ car l'ensemble des variables NTG, Phi So dépendent notamment des faciès et ainsi de la localisation des faciès dans le modèle.

Le mode d'une distribution triangulaire peut également être appelé base.

Dans la présente invention, $Esp(X)$ désigne l'espérance (valeur moyenne) d'une variable aléatoire X, $Var(X)$ désigne sa variance et $Cov(X,Y)$ désigne la covariance de deux variables aléatoires X, Y.

En faisant l'hypothèse de l'indépendance des paramètres NTG, Phi et So, il est possible de simplifier grandement le calcul de cette espérance. Expérimentalement cette hypothèse a été vérifiée et cette simplification, qui n'est pas la simple application de principes mathématiques, permet de mutualiser le calcul de la la somme (sur la pluralité d'éléments architecturaux) de $p_{AE}(c).\frac{1}{3}\Big(p_{A,AE,min}(c) + p_{A,AE,max}(c) + p_{A,AE,mode}(c)\Big)$ et éventuellement de calculer séparément les espérances de $Esp(\varphi_A(c))$, $Esp(NTG_A(c))$, $Esp(So_A(c))$.

Cette simplification permet une meilleure efficacité lors des calculs à réaliser de l'espérance et ainsi améliorer sensiblement les temps de calculs nécessaires.

En outre, chaque maille c du modèle pouvant être associée à une proportion de porosité pour chacun des faciès de ladite pluralité de faciès, ladite proportion de porosité pouvant être une variable aléatoire de distribution triangulaire définie par une valeur minimale $\varphi_{A,min}(c)$, une valeur maximale $\varphi_{A,min}(c)$, et un mode $\varphi_{A,mod}(c)$, le procédé peut comprendre en outre :

/c-1/ détermination, pour chaque maille c de ladite colonne et pour chaque faciès A parmi la pluralité de faciès, de la valeur $\frac{1}{3}\Big(\varphi_{A,min}(c) + \varphi_{A,max}(c) + \varphi_{A,mode}(c)\Big)$,

La détermination de l'étape /d/ peut alors être fonction de la valeur déterminée à l'étape /c-1/ pour chaque maille c de ladite colonne et pour chaque faciès A parmi la pluralité de faciès.

Ainsi, la valeur $Esp(\varphi_A(c))$ peut être aisément calculée, indépendamment des autres paramètres, si la variable $\varphi_A(c)$ comporte une incertitude.

Dans un mode de réalisation possible, chaque maille c du modèle pouvant être associée à une proportion de volume rocheux favorable à la présence d'hydrocarbures pour chacun des faciès de ladite pluralité de faciès, ladite proportion de volume rocheux favorable à la présence d'hydrocarbures pouvant être une variable aléatoire de distribution triangulaire définie par une valeur minimale $NTG_{A,min}(c)$, une valeur maximale $NTG_{A,max}(c)$, et un mode $NTG_{A,mode}(c)$, le procédé peut comprendre en outre :

/c-2/ détermination, pour chaque maille c de ladite colonne et pour chaque faciès A parmi la pluralité de faciès, de la valeur $\frac{1}{3}\Big(NTG_{A,min}(c) + NTG_{A,max}(c) + NTG_{A,mode}(c)\Big)$,

La détermination de l'étape /d/ peut alors être fonction de la valeur déterminée à l'étape /c-2/ pour chaque maille c de ladite colonne et pour chaque faciès A parmi la pluralité de faciès.

Ainsi, la valeur $Esp(NTG_A(c))$ peut être aisément calculée, indépendamment des autres paramètres, si la variable $NTG_A(c)$ comporte une incertitude.

Avantageusement, chaque maille c du modèle pouvant être associée à une saturation en hydrocarbure liquide, ladite saturation en hydrocarbure liquide pouvant être caractérisée par une cote d'interface hydrocarbure liquide-eau $z_w$ ayant une probabilité $p(z_w)$ de distribution comprise entre une valeur maximale $z_{w,min}$, et une valeur minimale $z_{w,max}$, et par une distribution triangulaire de la saturation en hydrocarbures pour chaque cote h au-dessus de cette cote d'interface, ladite distribution de saturation en hydrocarbure pouvant être définie par une valeur minimale $CS_{HC,A,min}(h)$, une valeur maximale $CS_{HC,A,max}(h)$, et un mode $CS_{HC,A,mode}(h)$, le procédé peut comprendre en outre :

/c-3/ détermination, pour chaque maille c de ladite colonne ayant une cote z et pour chaque faciès A parmi la pluralité de faciès, de la valeur

$$\int_{z_{w,max}}^{z_{w,min}} \frac{cs_{HC,max}(z-z_w) + cs_{HC,mode}(z-z_w) + cs_{HC,min}(z-z_w)}{3} p(z_w) \cdot dz_w$$

La détermination de l'étape /d/ peut être fonction de la valeur déterminée à l'étape /c-3/ pour chaque maille c de ladite colonne et pour chaque faciès A parmi la pluralité de faciès.

Par notation, il est choisi que la notation $z_{w,min}$ correspond à la cote la plus haute (avec un axe $\bar{z}$ vers le haut) en comparaison à la cote $z_{w,max}$. Ainsi, nous avons $z_{w,min} \geq z_{w,max}$ en prenant cette notation. En effet, la cote de l'interface $z_{w,min}$ (respectivement $z_{w,max}$) correspond à la cote pour laquelle la quantité d'hydrocarbure est la moins importante (respectivement la plus importante).

Toutes les notations de cote $z_{X,min}$ et $z_{X,max}$ respectent le même principe (avec X pouvant être toute chaine de caractères).

Dans un mode de réalisation particulier de l'invention, ladite saturation en hydrocarbure liquide pouvant être caractérisée par une cote d'interface hydrocarbure liquide-gaz $z_g$ ayant une probabilité $p(z_g)$, de distribution comprise entre une valeur minimale $z_{g,min}$, et une valeur maximale $z_{g,max}$, le procédé peut comprendre en outre :

/c-4/ détermination, pour chaque maille c de ladite colonne ayant une cote z, de la valeur

$$\begin{cases} 0 \ si \ z \geq z_{g,min} \\ 1 - \int_{z_{g,max}}^{z} p(z_g) dz_g \ \ si \ z_{g,max} \leq z \leq z_{g,min} \\ 1 \ si \ z \leq z_{g,max} \end{cases}$$

La détermination de l'étape /d/ peut être fonction de la valeur déterminée à l'étape /c-3/ pour chaque maille c de cote z de ladite colonne et pour chaque faciès A parmi la pluralité de faciès, multipliée par la valeur déterminée à l'étape /c-4/ pour chaque maille c de cote z de ladite colonne.

En outre, la présente invention peut viser également un procédé de détermination d'une carte de variance de hauteur d'hydrocarbure liquide dans un modèle géologique.

Le procédé peut comporter, pour au moins une colonne du modèle géologique :

/e/ détermination d'une valeur d'espérance de hauteur d'hydrocarbure liquide dans le modèle géologique pour ladite colonne, comme exposée plus haut ;

/f/ détermination d'une valeur de variance de la hauteur d'hydrocarbure liquide pour ladite colonne de manière analytique en fonction de la somme déterminée à l'étape /e/.

Dans un mode de réalisation, les valeurs des cubes de proportions pour deux mailles différentes du modèle et pour des éléments architecturaux différents peuvent être considérées indépendantes entre elles.

En outre, le procédé peut comporter en outre :

/g/ réception d'un corrélogramme $\rho(A,\Delta z)$ selon une direction de ladite colonne pour ledit faciès A dans un élément architectural donné ;

/h/ détermination de l'espérance du produit de la présence du faciès A dans ledit élément architectural dans une maille c1 par la présence du faciès A dans ledit élément architectural dans une maille c2, la distance entre c1 et c2 selon ladite direction du corrélogramme étant $\Delta z$, la probabilité de présence du faciès A dudit élément architectural pour la maille c1 étant $p_{A,AE,c1}$, la probabilité de présence du faciès A dudit élément architectural pour la maille c2 étant $p_{A,AE,c2}$, en fonction de :

$$\left(1 - \rho(A, \Delta z)\right) \cdot \left(Esp\left(p_{A,AE,c1}\right) \cdot Esp\left(p_{A,AE,c2}\right) + \sqrt{Var\left(p_{A,AE,c1}\right) \cdot Var\left(p_{A,AE,c2}\right)}\right)$$

$$+ \rho(A, \Delta z) \cdot \left(\frac{1}{2} Esp\left(p_{A,AE,c1}\right) + \frac{1}{2} Esp\left(p_{A,AE,c2}\right)\right)$$

La détermination de l'étape /f/ peut alors être fonction de la détermination de l'étape /h/.

La présente invention vise également un dispositif destiné la détermination d'une carte d'espérance de hauteur d'hydrocarbure liquide dans un modèle géologique, le modèle géologique comportant des mailles pouvant être chacune associée à un faciès parmi une pluralité de faciès et à un élément architectural parmi une pluralité d'éléments architecturaux.

Le dispositif comporte, pour au moins une colonne du modèle géologique :

/a/ une interface pour la réception d'un cube de répartitions d'élément architectural pour chaque élément architectural AE parmi la pluralité d'éléments architecturaux, le cube de répartitions décrivant pour chaque maille c du modèle la probabilité $p_{AE}(c)$ que ladite maille appartienne audit élément architectural,

/b/ une interface pour la réception d'un cube de proportions pour chaque faciès parmi la pluralité de faciès et pour chaque élément architectural parmi la pluralité d'éléments architecturaux, le cube de proportions associé à un faciès A et à un élément architectural AE décrivant pour chaque maille c du modèle la proportion dudit faciès dans ladite maille si ladite maille appartient audit élément architectural AE, ladite proportion étant une variable aléatoire de distribution triangulaire définie par une valeur minimale $p_{A,AE,min}(c)$, une valeur maximale $p_{A,AE,max}(c)$, et un mode $p_{A,AE,mode}(c)$,

/c/ un circuit pour la détermination, pour chaque maille c de ladite colonne et pour chaque faciès A de la pluralité de faciès, de la somme sur la pluralité d'éléments architecturaux de

$$p_{AE}(c) \cdot \frac{1}{3}\left(p_{A,AE,min}(c) + p_{A,AE,max}(c) + p_{A,AE,mode}(c)\right).$$

/d/ un circuit pour la détermination d'une valeur d'espérance de hauteur d'hydrocarbure liquide pour ladite colonne de manière analytique en fonction de la somme déterminée par le circuit /c/ pour chaque maille c de ladite colonne et pour chaque faciès A.

Ainsi, la présente invention vise également un programme informatique comportant des instructions pour la mise en oeuvre du procédé précédemment décrit, lorsque ce programme est exécuté par un processeur.

Ce programme peut utiliser n'importe quel langage de programmation (par exemple, un langage objet ou autre), et être sous la forme d'un code source interprétable, d'un code partiellement compilé ou d'un code totalement compilé.

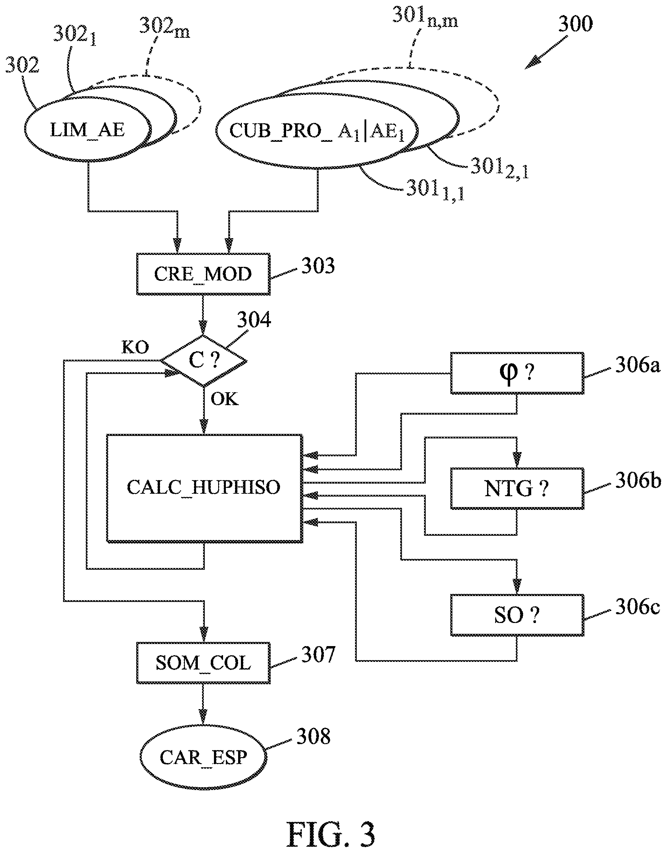

La figure 3 décrite en détails ci-après, peut former l'organigramme de l'algorithme général d'un tel programme informatique.

D'autres caractéristiques et avantages de l'invention apparaîtront encore à la lecture de la description qui va suivre. Celle-ci est purement illustrative et doit être lue en regard des dessins annexés sur lesquels :

- la figure 1a illustre un exemple possible de modèle géologique ;

- la figure 1b décrit un exemple possible d'une loi de probabilité ayant une distribution triangulaire ;

- la figure 2a décrit un exemple de coupe transversale d'un réservoir comportant de l'eau, du gaz et de l'huile ainsi que le taux de saturation en eau de la roche de ce réservoir.

- la figure 2b décrit un exemple de courbe de saturation en eau de la roche d'un réservoir modélisé comme étant continue et linéaire par morceaux ;

- la figure 3 est un exemple d'ordinogramme d'un mode de réalisation de l'invention ;

- la figure 4 montre un exemple de dispositif permettant la mise en oeuvre d'un mode de réalisation de l'invention ;

- Les figures 5a et 5b sont respectivement des exemples de cartes d'espérance et de variance de la hauteur d'hydrocarbure liquide dans le modèle déterminé à l'aide des outils de multi-réalisations ;

- Les figures 5c et 5d sont respectivement des exemples de cartes d'espérance et de variance de la hauteur d'hydrocarbure liquide dans le modèle déterminé à l'aide des procédés selon un mode de réalisation possible de l'invention.

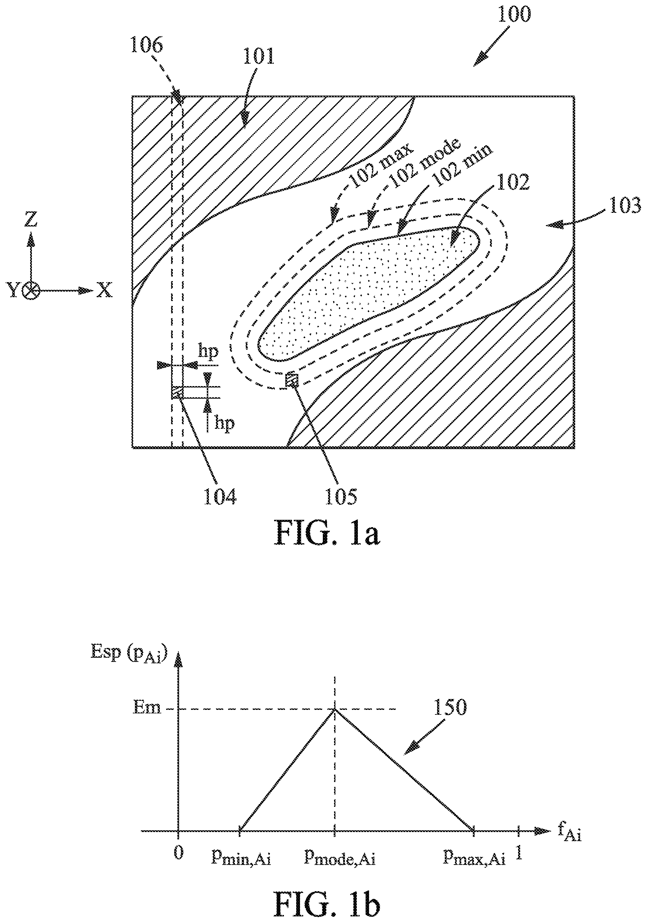

La figure 1a illustre un exemple possible d'une coupe transversale d'un modèle géologique 100.

Ce modèle géologique 100 est constitué d'un grand nombre de pixels (ex. 104, 105) décrivant chacun un faciès présent dans le sous-sol géologique.

Les données pétro-physiques NTG, Phi et So sont souvent déterminées pour chaque faciès. Pour chaque pixel c (de dimensions $h_p x h_p x h_p$), il est possible de calculer une valeur de HuPhiSo « pixel » définie comme suit :

$$\sum_{A_i} \mathbf{1}_{A_i}(x,y,z) \cdot h_p \cdot \varphi_{c,A_i} \cdot NTG_{c,A_i} \cdot SO_{c,A_i}$$

où $\mathbf{1}_{A_i}(x,y,z)$ est la fonction indicatrice du faciès $A_i$ (égale à 1 si le faciès pour le pixel de coordonnées (x,y,z) est $A_i$, égale à 0 sinon).

Bien entendu, chaque pixel n'est associé qu'à un unique faciès et :

$$\sum_{A_i} \mathbf{1}_{A_i}(x,y,z) = 1$$

Par ailleurs, selon l'histoire géologique du sous-sol, le remplissage sédimentaire et le contexte géodynamique qui ont donné naissance aux roches du réservoir, la sédimentation peut s'être faite de manière hétérogène mais structurée. Les environnements sédimentaires ainsi créés sont plus ou moins riches en certains faciès.

Par exemple, dans un chenal, les faciès les plus présents seront les sables grossiers. Plus la roche est éloignée du chenal et plus elle est argileuse.

Ces structures sont généralement appelées les éléments architecturaux (ou AE en anglais pour « Architectural Element »).

Pour un pixel donné du modèle, on considère qu'il n'existe qu'un seul élément architectural. Le modèle géologique 100 comprend trois éléments architecturaux 101, 102, et 103.

Les interfaces entre deux éléments architecturaux sont souvent repérées sur des cartes par les géophysiciens. Par exemple, l'interface $102_{min}$ peut représenter une interface possible entre l'élément architectural 102 et l'élément architectural 103.

Il est ainsi possible d'introduire, comme pour les faciès, une indicatrice d'éléments architecturaux $\mathbf{1}_{AE_j}(x,y,z)$ indiquant la présence ou non de l'élément architectural $AE_j$ pour le pixel de coordonnées (x,y,z).

Les proportions de faciès en un pixel donné c sont, le plus souvent, fonction de l'élément architectural associé à ce pixel c. Ainsi l'indicatrice de faciès $A_i$, pour un élément architectural donné $AE_j$, s'exprime sous la forme $\mathbf{1}_{A_i|AE_j}(x,y,z)$ (également notée $\mathbf{1}_{A_i,AE_j}(x,y,z)$ ou $\mathbf{1}_{A_i,AE_j}(c)$).

Ainsi, la valeur de HuPhiSo « pixel » est définie comme suit :

$$\sum_{A_i} \sum_{AE_j} \mathbf{1}_{AE_j}(x,y,z) \cdot \mathbf{1}_{A_i|AE_j}(x,y,z) \cdot h_c \cdot \varphi_{c,A_i} \cdot NTG_{c,A_i} \cdot SO_{c,A_i}$$

avec $h_c$ la hauteur du pixel c considéré.

Il est également possible de déterminer les valeurs HuPhiSo « colonne » en sommant les valeurs HuPhiSo « pixel » pour toutes les colonnes du modèle (par exemple, colonne106). Cette valeur HuPhiSo « colonne » est donnée par la formule suivante :

$$\sum_c \sum_{A_i} \left( \sum_{AE_j} \mathbf{1}_{AE_j}(c) \cdot \mathbf{1}_{A_i|AE_j}(c) \right) \cdot h_c \cdot \varphi_{c,A_i} \cdot NTG_{c,A_i} \cdot So_{c,A_i}$$

avec c les pixels de la colonne considérée et avec $h_c$ la hauteur du pixel courant.

Dans le cas général, l'indicatrice $\mathbf{1}_{A_i|AE_j}(x,y,z)$ n'est pas connue de manière précise, pixel par pixel : seules les cubes de proportions des différents faciès $A_i$ est connu. Afin de palier ce problème, les solutions antérieures proposaient :

- de déterminer les limites des éléments architecturaux de manière stochastique ;
- de déterminer une carte de faciès en simulant de manière stochastique une valeur possible de faciès pour chaque pixel grâce aux cubes de proportions donnée pour chaque facies de chaque élément architectural,
- de déterminer la valeur HuPhiSo « pixel » de chaque pixel ;
- de sommer les valeurs HuPhiSo « pixel » pour chaque colonne du modèle (i.e. carte HuPhiSo) ;
- de réitérer les quatre premières étapes un grand nombre de fois afin, d'obtenir une moyenne et une variance convergente des cartes HuPhiSo.

La présente invention ne choisit pas cette voie stochastique.

En effet, il est possible de déterminer pour chaque colonne du modèle, la moyenne des valeurs HuPhiSo colonne et la variance des valeurs HuPhiSo colonne de manière analytique, après certaines hypothèses et simplifications géologiques présentées ci-après.

## DETERMINATION DE L'ESPERANCE

L'espérance des valeurs HuPhiSo colonne peut s'exprimer sous la forme :

$$Esp(HuPhiSO)$$

$$= \sum_{c=1}^{n} \sum_{A_i} h_c \cdot \left( \sum_{AE_j} \left( Esp\left[\mathbf{1}_{AE_j}(c)\right] \cdot Esp\left[\mathbf{1}_{A_i|AE_j}(c)\right] \right) \right)$$

$$\cdot \left( Esp(\varphi_{c,A_i}) \cdot Esp(NTG_{c,A_i}) \cdot Esp(SO_{c,A_i}) \right)$$

en supposant que les pixels c de la colonne sont indexés de 1 à n (n étant un entier positif supérieur à 2).

L'expression de cette moyenne fait certaines hypothèses géologiques afin de simplifier l'expression de cette moyenne : ex. l'indépendance des paramètres $\varphi_{c,A_i}$, $NTG_{c,A_i}$ et $SO_{c,A_i}$ (ainsi, l'espérance du produit de ces variables est également au produit de leur espérance). Ainsi, cette expression n'est pas la simple résolution mathématique du problème posé.

Si l'indicatrice de faciès $\mathbf{1}_{A_i}(c)$ est une variable aléatoire suivant une loi de Bernouilli dont le paramètre est la proportion locale du faciès, alors l'espérance de cette variable sachant $p_{A_i}(c)$ peut s'exprimer sous la forme suivante :

$$Esp\left(1_{A_i}(c) \mid p_{A_i}(c)\right) = Esp\left(1_{A_i}(c) = 1 \mid p_{A_i}(c)\right) = p_{A_i}(c)$$

En conclusion :

$$Esp\left(1_{A_i}(c)\right) = Esp\left(p_{A_i}(c)\right)$$

Les proportions $p_{A_i}(c)$ ne sont déterminées avec certitude qu'au niveau des puits. Il existe ainsi une incertitude sur la proportion de faciès dans le reste du réservoir. A cause de cette incertitude, la proportion de faciès peut être, elle aussi, une variable aléatoire, dont la loi de probabilité peut être modélisée par une distribution triangulaire 150 décrite dans la figure 1b (pour un faciès $A_i$ donné et pour un pixel c) ayant comme valeur minimale $p_{min,Ai}$, comme valeur de mode $p_{mode,Ai}$ et comme valeur maximale $p_{max,Ai}$. Ainsi :

$$Esp\left(\mathbf{1}_{A_i|AE_j}(c)\right) = \frac{p_{min,A_i|AE_j}(c) + p_{mode,A_i|AE_j}(c) + p_{max,A_i|AE_j}(c)}{3}$$

Bien entendu, le réservoir n'est pas nécessairement stationnaire, i.e. ses proportions $p_{A_i}(c)$ (et

7

$p_{min,A_i}(c), p_{mode,A_i}(c), p_{max,A_i}(c))$ peuvent varier en fonction de la cellule c considérée : par exemple, en se rapprochant d'une limite ou d'un point particulier, un faciès peut tendre à disparaître ou tendre à prédominer.

Le même raisonnement est valable pour calculer l'espérance de l'indicatrice d'éléments architecturaux. Néanmoins, la proportion d'éléments architecturaux ne connait pas d'incertitude même si plusieurs positions d'interfaces entre éléments architecturaux sont possibles (il est souvent demandé à l'opérateur de pointer une interface minimum $102_{min}$, et une interface maximum $102_{max}$ (éventuellement une interface probable $102_{mode}$, si cette dernière interface n'est pas déterminé, il est considéré que cette « interface probable » se situe à équidistance de l'interface minimum et maximum). Ainsi :

$$Esp\left(1_{AE_j}(c)\right) = p_{AE_j}(c)$$

En conclusion, et par analogie, l'expression $\sum_{AE_j} Esp[\mathbf{1}_{AE_j}(c)] \cdot Esp[\mathbf{1}_{A_i|AE_j}(c)]$ peut s'exprimer sous la forme

$$\sum_{AE_j} p_{AE_j}(c) \cdot \frac{p_{min,A_i|AE_j}(c) + p_{mode,A_i|AE_j}(c) + p_{max,A_i|AE_j}(c)}{3}$$

qui est en fait la proportion de faciès $A_i$ pour le pixel c (qui prend en compte la possible présence de plusieurs AE et donc plusieurs cubes de proportions pour le même faciès).

Une roche est constituée de grains et de vides entre les grains. La porosité de la roche est le rapport entre le volume des vides et le volume de la roche :

$$\varphi = \frac{V_{vide}}{V_{total}}$$

Cette porosité est le plus souvent répartie selon une distribution naturelle comme une loi normale. Sa moyenne est, elle aussi, incertaine et suit une loi de probabilité triangulaire.

Phi est donc géologiquement la somme de deux variables aléatoires :

$$\varphi = \varphi_{moy} + \varphi_{stoch}$$

où $\varphi_{moy}$ est une variable aléatoire qui peut suivre une loi triangulaire (semblable à la figure 1b), de valeur minimale $\varphi_{min}$, de valeur de mode $\varphi_{mode}$ et de valeur maximale $\varphi_{max}$, et où $\varphi_{stoch}$ est une variable aléatoire qui suit une loi normale centrée (de moyenne nulle).

Ainsi :

$$Esp(\varphi) = Esp(\varphi_{moy}) + Esp(\varphi_{stoch}) = Esp(\varphi_{moy}) = \frac{\varphi_{min} + \varphi_{mode} + \varphi_{max}}{3}$$

La variable NTG représente la fraction d'un volume rocheux favorable à la présence d'hydrocarbures. Si V est un volume rocheux, alors NTG*V est le volume favorable à la présence d'hydrocarbures, c'est le volume utile de la roche. La valeur NTG peut être répartie selon une distribution naturelle qui suit en général (mais non nécessairement) une loi normale de moyenne $NTG_{moy}$.

La moyenne $NTG_{moy}$ peut être, elle-même, incertaine et peut suivre une loi de probabilité triangulaire (semblable à la figure 1b), de valeur minimale $NTG_{min}$, de valeur de mode $NTG_{mode}$ et de valeur maximale $NTG_{max}$.

La distribution NTG est donc géologiquement la somme de deux variables aléatoires :

$$NTG = NTG_{moy} + NTG_{stoch}$$

où $NTG_{moy}$ est une variable aléatoire qui suit la loi triangulaire décrite précédemment et où $NTG_{stoch}$ est une variable aléatoire qui suit une loi normale centrée (de moyenne nulle).

$$Esp(NTG) = Esp\left(NTG_{moy}\right) = \frac{NTG_{min} + NTG_{mode} + NTG_{max}}{3}$$

La variable SO représente la saturation en huile de la roche.

Les pores des roches peuvent être remplis de gaz, d'eau ou d'huile (pétrole). La saturation en huile So, la saturation en eau Sw et la saturation en gaz Sg se complètent donc :

$$So + Sw + Sg = 1$$

De plus, on note $S_{HC}$ la saturation en hydrocarbures (i.e. gaz et huile) :

$$S_{HC} = So + S_g$$

On a alors :

$$S_{HC} = 1 - Sw$$

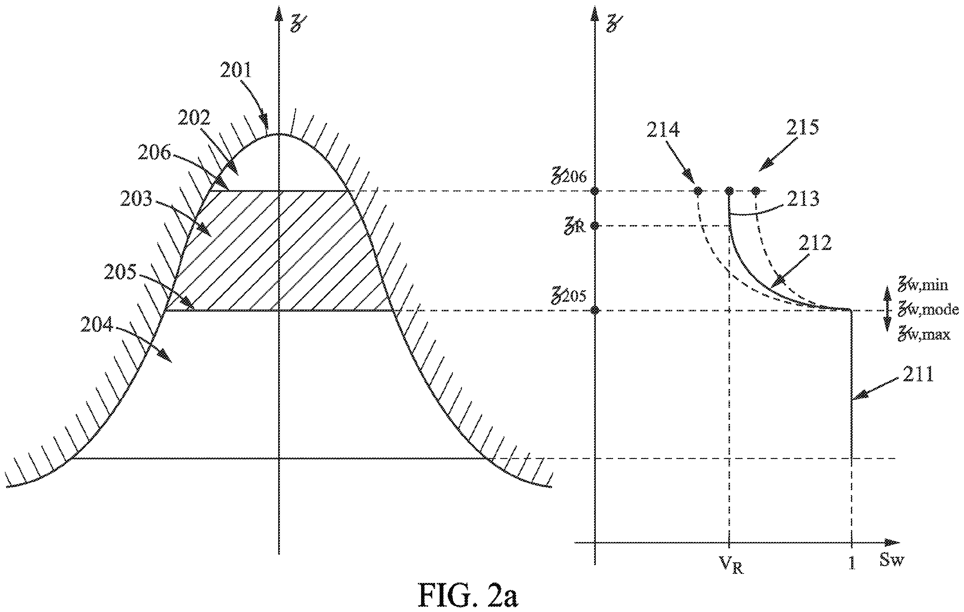

Dans les réservoirs (roches poreuses et perméables), les fluides sont soumis à la gravité et répartis selon leur densité. Ainsi, sous une roche perméable 201, il est possible de trouver (voir la figure 2a) en haut le gaz (zone 202), au milieu l'huile/pétrole (zone 203) et enfin l'eau (zone 204).

En-dessous du contact huile/eau 205 (cote $z_{205}$), les pores ne sont remplis que par l'eau et, au-dessus du contact 205 (zone 203), ils peuvent être remplis d'huile mais de l'eau résiduelle peut également être adsorbée aux grains de la roche.

Ainsi, en dessous de la cote $z_{205}$, la saturation en eau Sw est de 1 (courbe 211). Au-dessus de la cote $z_{205}$, la saturation en eau Sw diminue progressivement (courbe 212) jusqu'à une cote ($z_R$) à laquelle la saturation en eau Sw reste sensiblement constante (i.e. la valeur résiduelle de saturation en eau) et égale à $V_R$ (courbe 213).

Les courbes de saturation (211, 212, 213) peuvent être, elles-mêmes, incertaines (pour une cote $z_{205}$ fixée et connue de manière certaine). Il est ainsi possible de déterminer trois courbes de saturation en eau :

- une courbe présentant un minimum de saturation en eau (214),

- une courbe présentant un maximum de saturation en eau (215),

- une courbe de mode présentant le cas le plus probable (212 et 213).

Ainsi, pour chaque hauteur au-dessus du contact 205, il est possible de définir une loi de probabilité triangulaire pour la saturation en eau à l'aide de trois points correspondants des courbes ainsi définies.

Par ailleurs, la cote $z_w$ d'interface entre l'huile et l'eau ($z_{205}$ dans l'exemple de la figure 2a) peut ne pas être connue de manière certaine. Cette cote $z_w$ peut également être représentée par une variable aléatoire qui suit une loi de probabilité triangulaire de valeur maximale $z_{w,min}$, de valeur minimale $z_{w,max}$ et de valeur de mode $z_{w,mode}$.

On note $S_{HC}(z) = CS_{HC}(z - z_w)$ pour mettre en évidence le fait que la courbe de saturation en hydrocarbures peut être translatée verticalement du fait de l'incertitude sur $z_w$ :

- la courbe présentant un minimum de saturation en hydrocarbures est notée $CS_{HCmin}(z - z_w)$,

- la courbe présentant un maximum de saturation en hydrocarbures est notée $CS_{HC,max}(z - z_w)$,

- la courbe de mode présentant le cas le plus probable est notée $CS_{HC,mode}(z - z_w)$.

De même, la cote $z_g$ représentant la cote de l'interface gaz/huile ($z_{206}$ dans l'exemple de la figure 2a pour l'interface 206) peut ne pas être connue de manière certaine. Cette cote $z_g$ peut également être représentée par une variable aléatoire qui suit une loi de probabilité triangulaire de valeur maximale $z_{g,min}$, de valeur minimale $z_{g,max}$ et de valeur de mode $z_{g,mode}$.

Ainsi, l'espérance de la saturation en hydrocarbures $S_{HC}$ peut s'exprimer sous la forme :

$$Esp\big(S_{HC}(z)\big) = Esp\big(1 - Sw(z)\big) = Esp\big(CS_{HC}(z - z_w)\big)$$

$$= Esp\big(Esp(CS_{HC}(z - z_w)\,|\,z_w), z_w\big)$$

Les variables $CS_{HC}$ et Zw pouvant être considérées, géologiquement, comme deux variables aléatoires indépendantes, il est possible d'écrire :

$$Esp\big(S_{HC}(z)\big) = \int_{z_{w,max}}^{z_{w,min}} \int_{cs_{HC,min}}^{cs_{HC,max}} cs_{HC}(z - z_w) \cdot p(CS_{HC}(z - z_w)\,|\,z_w) \cdot p(z_w) \cdot dcs_{HC}$$
$$\cdot dz_w$$

$$Esp\big(S_{HC}(z)\big) = \int_{z_{w,max}}^{z_{w,min}} p(z_w) \cdot Esp(CS_{HC}(z - z_w)\ sachant\ z_w) \cdot dz_w$$

$$Esp\big(S_{HC}(z)\big) = \int_{z_{w,max}}^{z_{w,min}} \frac{cs_{HC,min}(z - z_w) + cs_{HC,mode}(z - z_w) + cs_{HC,max}(z - z_w)}{3} p(z_w)$$
$$\cdot dz_w$$

Ainsi, il existe trois termes à calculer de type $\int_{z_{w,max}}^{z_{w,min}} \frac{cs_{HC,XXX}(z - z_w)}{3} p(z_w) \cdot dz_w$ (avec XXX parmi min, max et mode).

Si la distribution de probabilité de $z_w$ est supposée triangulaire, il est possible d'établir deux cas :

$$\text{si } z_w \in \big[z_{w,max}, z_{w,mode}\big]$$

$$p(z_w) = p_{1p} \cdot z_w + p_{1c}$$

$$= \frac{2 \cdot z_w}{\big(z_{w,min} - z_{w,max}\big) \cdot \big(z_{w,mode} - z_{w,max}\big)}$$

$$+ \frac{-2z_{w,max}}{\big(z_{w,min} - z_{w,max}\big) \cdot \big(z_{w,mode} - z_{w,max}\big)}$$

$$\text{si } z_w \in \big[z_{w,mode}, z_{w,min}\big]$$

$$p(z_w) = p_{2p} \cdot z_w + p_{2c}$$

$$= \frac{-2 \cdot z_w}{\big(z_{w,min} - z_{w,max}\big) \cdot \big(z_{w,min} - z_{w,mode}\big)}$$

$$+ \frac{2 \cdot z_{w,min}}{\big(z_{w,min} - z_{w,max}\big) \cdot \big(z_{w,min} - z_{w,mode}\big)}$$

Ainsi :

$$\int_{z_{w,max}}^{z_{w,min}} \frac{cs_{HC,XXX}(z-z_w)}{3} p(z_w) \cdot dz_w$$

$$= \int_{z_{w,max}}^{z_{w,mode}} \left[ \frac{cs_{HC,XXX}(z-z_w)}{3} (p_{1p} \cdot z_w + p_{1c}) \right] \cdot dz_w$$

$$+ \int_{z_{w,mode}}^{z_{w,min}} \left[ \frac{cs_{HC,XXX}(z-z_w)}{3} (p_{2p} \cdot z_w + p_{2c}) \right] \cdot dz_w$$

Puis en réalisant un changement de variable $h = z - z_w$, il est possible d'écrire :

$$\int_{z_{w,max}}^{z_{w,min}} \frac{cs_{HC,XXX}(z-z_w)}{3} p(z_w) \cdot dz_w$$

$$= \int_{z-z_{w,mode}}^{z-z_{w,max}} \left[ \frac{cs_{HC,XXX}(h)}{3} (p_{1p}(z-h) + p_{1c}) \right] \cdot dh$$

$$+ \int_{z-z_{w,min}}^{z-z_{w,mode}} \left[ \frac{cs_{HC,XXX}(h)}{3} (p_{2p}(z-h) + p_{2c}) \right] \cdot dh$$

En pratique, la courbe $CS_{HC,XXX}$ (et donc la courbe $Sw_{YYY}$ avec YYY=min si XXX=max, YYY=mode si XXX=mode et YYY=max si XXX=min, car $Sw_{min}$ = 1-$CS_{HC,max}$) est souvent linéaire par morceaux, par exemple, entre deux cotes successives des listes suivantes :

- $h1_1$, $h1_2$, ... $h1_{n1-1}$, $h1_{n1}$ (ordonnées par ordre croissant dans l'intervalle [$z - z_{w,max}$, $z - z_{w,mode}$], les cotes extrêmes correspondant aux bornes de l'intervalle, ces cotes extrêmes pouvant ne pas correspondre à un point de rupture de la linéarité de la courbe, voir ci-dessous) et

- $h2_1$, $h2_2$, ... $h2_{n2-1}$, $h2_{n2}$ (ordonnées par ordre croissant dans l'intervalle [$z - z_{w,mode}$, $z - z_{w,min}$], les cotes extrêmes correspondant aux bornes de l'intervalle, ainsi $h2_1$= $h1_{n1}$, ces cotes extrêmes pouvant ne pas correspondre à un point de rupture de la linéarité de la courbe, voir ci-dessous).

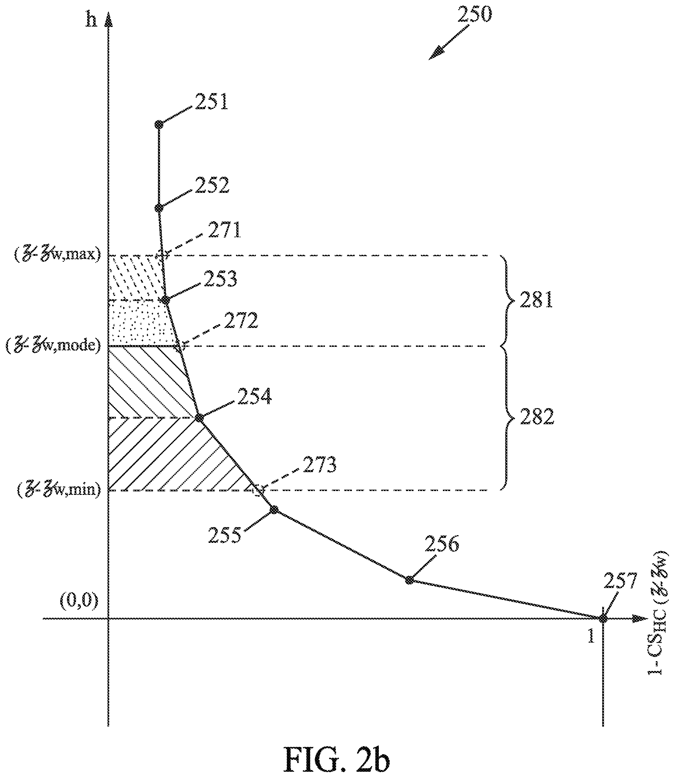

Par exemple, la figure 2b représente un exemple de courbe de saturation en eau 1 - $CS_{HC,XXX}(z - z_w)$ (250), la cote $z_w$ étant représentée par la ligne h=0.
Cette courbe 250 est linéaire par morceau entre les points successifs 251, 252, 253, 254, 255, 256 et 257.
Si le point de cote ($z - z_{w,max}$) ne correspond pas à un des points précédents, il est possible de définir un nouveau point 271 sur la partie linéaire de la courbe de saturation en eau entre les points 252 et 253. Il en va de même pour la cote ($z - z_{w,mode}$) (correspondant alors au nouveau point 272) et pour la cote ($z - z_{w,min}$) (correspondant alors au nouveau point 273).
Ainsi :

$$\int_{z-z_{w,min}}^{z-z_{w,max}} \frac{cs_{HC,XXX}(z - z_w)}{3} p(z_w) \cdot dz_w$$

$$= \sum_{i=1}^{n1-1} \left[ \int_{h1_{i+1}}^{h1_i} \left[ \frac{cs_{HC,XXX}(h)}{3} \left( p_{1p}(z - h) + p_{1c} \right) \right] \cdot dh \right]$$

$$+ \sum_{i=1}^{n2-1} \left[ \int_{h2_{i+1}}^{h2_i} \left[ \frac{cs_{HC,XXX}(h)}{3} \left( p_{2p}(z - h) + p_{2c} \right) \right] \cdot dh \right]$$

Dans l'exemple de la figure 2b, chacune des deux sommes précédentes comprend deux termes :

- $\sum_{i=1}^{n1-1} \left[ \int_{h1_{i+1}}^{h1_i} \left[ \frac{cs_{HC,XXX}(h)}{3} \left( p_{1p}(z-h) + p_{1c} \right) \right] \cdot dh \right]$ (intervalle 281) comprend un terme correspondant à l'intégral entre les cotes du point 271 et du point 253 et un terme à l'intégral entre les cotes du point 253 et du point 272 ;

- $\sum_{i=1}^{n2-1} \left[ \int_{h2_{i+1}}^{h2_i} \left[ \frac{cs_{HC,XXX}(h)}{3} \left( p_{2p}(z-h) + p_{2c} \right) \right] \cdot dh \right]$ (intervalle 282) comprend un terme correspondant à l'intégral entre les cotes du point 272 et du point 254 et un terme à l'intégral entre les cotes du point 254 et du point 273.

Il est considéré que l'équation décrivant la courbe $cs_{HC,XXX}$ entre deux points $h1_i$ et $h1_{i+1}$ est $A1_{i,XXX} h + B1_{i,XXX}$ et que l'équation décrivant la courbe $cs_{HC,XXX}$ entre deux points $h2_i$ et $h2_{i+1}$ est $A2_{i,XXX} h + B2_{i,XXXX}$.

Autrement dit, la courbe $cs_{HC,XXX}$ est linéaire par morceau entre deux points consécutifs suivants : $(C1_{1,XXX}, h1_1)$, $(C1_{2,XXX}, h1_2)$, ... $(C1_{n1-1,XXX}, h1_{n1-1})$, $(C1_{n1,XXX}, h1_{n1}) = (C2_{1,XXX}, h2_1)$, $(C2_{2,XXX}, h2_2)$, ... $(C2_{n2-1,XXX}, h2_{n2-1})$, $(C2_{n2,XXX}, h2_{n2})$.

Alors :

$$\frac{C1_{i+1,XXX} - C1_{i,XXX}}{h1_{i+1} - h1_i} = A1_{i,XXX} \text{ et } C1_{i,XXX} - \frac{C1_{i+1,XXX} - C1_{i,XXX}}{h1_{i+1} - h1_i} h1_i = B1_{i,XXX}$$

et

$$\frac{C2_{i+1,XXX} - C2_{i,XXX}}{h2_{i+1} - h2_i} = A2_{i,XXX} \text{ et } C2_{i,XXX} - \frac{C2_{i+1,XXX} - C2_{i,XXX}}{h2_{i+1} - h2_i} h2_i = B2_{i,XXX}$$

et

Ainsi :

$$\int_{z_{w,max}}^{z_{w,min}} \frac{cs_{HC,XXX}(z - z_w)}{3} p(z_w) \cdot dz_w$$

$$= \sum_{i=1}^{n1-1} \left[ \int_{h1_i}^{h1_{i+1}} \left[ \frac{A1_{i,XXX} \cdot h + B1_{i,XXX}}{3} \left( p_{1p}(z - h) + p_{1c} \right) \right] \cdot dh \right]$$

$$+ \sum_{i=1}^{n2-1} \left[ \int_{h2_i}^{h2_{i+1}} \left[ \frac{A2_{i,XXX} \cdot h + B2_{i,XXX}}{3} \left( p_{2p}(z - h) + p_{2c} \right) \right] \cdot dh \right]$$

ou encore :

$$\int_{z_{w,max}}^{z_{w,min}} \frac{cs_{HC,XXX}(z-z_w)}{3} p(z_w) \cdot dz_w$$

$$= \frac{1}{3} \sum_{i=1}^{n1-1} \left[ \left( -p_{1p} \cdot A1_{i,XXX} \cdot \frac{h1_{i+1}^3}{3} \right. \right.$$

$$+ \left( A1_{i,XXX} \cdot (p_{1c} + p_{1p} \cdot z) - p_{1p} \cdot B1_{i,XXX} \right) \cdot \frac{h1_{i+1}^2}{2} + B1_{i,XXX} \cdot (p_{1c}$$

$$\left. + p_{1p} z) \cdot h1_{i+1} \right)$$

$$- \left( -p_{1p} \cdot A1_{i,XXX} \cdot \frac{h1_i^3}{3} + \left( A1_{i,XXX} \cdot (p_{1c} + p_{1p} \cdot z) - p_{1p} \cdot B1_{i,XXX} \right) \cdot \frac{h1_i^2}{2} \right.$$

$$\left. \left. + B1_{i,XXX} \cdot (p_{1c} + p_{1p} z) \cdot h1_i \right) \right]$$

$$+ \frac{1}{3} \sum_{i=1}^{n2-1} \left[ \left( -p_{2p} \cdot A2_{i,XXX} \cdot \frac{h2_{i+1}^3}{3} \right. \right.$$

$$+ \left( A2_{i,XXX} \cdot (p_{2c} + p_{2p} \cdot z) - p_{2p} \cdot B2_{i,XXX} \right) \cdot \frac{h2_{i+1}^2}{2} + B2_{i,XXX} \cdot (p_{2c}$$

$$\left. + p_{2p} z) \cdot h2_{i+1} \right)$$

$$- \left( -p_{2p} \cdot A2_{i,XXX} \cdot \frac{h2_i^3}{3} + \left( A2_{i,XXX} \cdot (p_{2c} + p_{2p} \cdot z) - p_{2p} \cdot B2_{i,XXX} \right) \cdot \frac{h2_i^2}{2} \right.$$

$$\left. \left. + B2_{i,XXX} \cdot (p_{2c} + p_{2p} z) \cdot h2_i \right) \right]$$

Ainsi, chacun des termes de $Esp(S_{HC}(z))$ peut être aisément calculé (i.e. $\int_{z_{w,max}}^{z_{w,min}} \frac{cs_{HC,XXX}(z-z_w)}{3} p(z_w) \cdot dz_w$ avec XXX parmi min, max et mode).

Par ailleurs, il est possible de définir l'indicatrice « huile + eau » (ou encore indicatrice « liquide-gaz », le liquide étant alors ici l'huile et l'eau) $\mathbf{1}_{OW}$ par :

$$\mathbf{1}_{OW}(z) = \begin{cases} 1 \ si \ z < z_g \\ 0 \ sinon \end{cases}$$

Ainsi, la saturation en huile peut s'exprimer sous la forme :

$$So(z) = S_{HC}(z) \cdot \mathbf{1}_{OW}(z)$$

En conclusion :

$$Esp\big(So(z)\big) = Esp\big(S_{HC}(z)\big) \cdot Esp\big(\mathbf{1}_{OW}(z)\big)$$

L'indicatrice «liquide-gaz » peut se déterminer comme suit :

$$Esp\big(\mathbf{1}_{OW}(z)\big) = \begin{cases} 0 \; si \; z \geq z_{g,min} \\ 1 - \int_{Z_{G,min}}^{z} p(z_g)dz_g \; si \; z_{g,max} \leq z \leq z_{g,min} \\ 1 \; si \; z \leq z_{g,max} \end{cases}$$

avec $p(z_g)$ la probabilité que la cote d'interface gaz-huile $z_g$ se situe à cette cote, et cette probabilité ayant une distribution comprise entre les bornes $z_{g,max}$ et $z_{g,min}$.

La figure 3 représente un ordinogramme permettant la détermination d'une espérance de la carte HuPhiSo, dans un mode de réalisation de l'invention.

Lors de la réception des $n_x m$ cubes de proportions $301_{1,1}$, $301_{2,1}$, ..., $301_{n,m}$ (décrivant respectivement les proportions des faciès $A_1|AE_1$, $A_2|AE_1$, ... $A_n|AE_m$) et des cubes de répartitions des m éléments architecturaux $302_1$, $302_2$, ..., $302_m$ (décrivant respectivement l'élément architectural $AE_1$, $AE_2$, ... $AE_m$ dans le modèle), il est possible de créer (étape 303) un modèle HuPhiSo vide. Ce modèle est un modèle comportant des cellules/pixels. Ce modèle est de dimensions analogues aux dimensions des cubes de proportions et/ou des cubes de répartitions décrivant la répartition des éléments architecturaux.

Le cube de proportions $301_{i,j}$ comporte une pluralité de cellules c associées chacune à trois valeurs de proportion décrivant ainsi une distribution triangulaire de proportion : une valeur minimale $p_{min,A_i|AE_j}(c)$, une valeur maximale $p_{max,A_i|AE_j}(c)$ et une valeur de mode $p_{mode,A_i|AE_j}(c)$.

Le cube de répartitions $302_j$ comporte une pluralité de cellules c associées chacune à une valeur de proportion $p_{AE_j}(c)$.

Si une cellule du modèle n'a aucune valeur d'espérance HuPhiSo associée (test 304, sortie OK), cette cellule est sélectionnée.

Il est ainsi possible de déterminer (étape 305) l'espérance de la valeur HuPhiSo pour la cellule sélectionnée :

$$\sum_{A_i} h_c \cdot \left( \sum_{AE_j} \left( p_{AE_j}(c) \cdot \frac{p_{min,A_i|AE_j}(c) + p_{mode,A_i|AE_j}(c) + p_{max,A_i|AE_j}(c)}{3} \right) \right)$$
$$\cdot \left( Esp(\varphi_{c,A_i}) \cdot Esp(NTG_{c,A_i}) \cdot Esp(SO_{c,A_i}) \right)$$

Cette formule fait un certain nombre de simplifications fondées sur des considérations géologiques évoquées ci-avant.

S'il est considéré que les variables $\varphi_{c,A_i}$, $NTG_{c,A_i}$ ou $SO_{c,A_i}$ sont certaines (i.e. valeurs fixées sans incertitude) pour la cellule c et pour le faciès Ai, alors l'espérance de ces valeurs est égale à ces valeurs certaines et la valeur déterminée à l'étape 305 peut être associée directement à la cellule sélectionnée dans le modèle.

Si jamais la variable $\varphi_{c,A_i}$ est considérée comme incertaine, il est fourni trois valeurs représentatives d'une distribution triangulaire de probabilité pour cette cellule sélectionnée et pour chaque faciès $A_i$ : une valeur minimale $\varphi_{c,A_i,min}$, une valeur maximale $\varphi_{c,A_i,max}$, et une valeur de mode $\varphi_{c,A_i,mode}$. Dès lors, l'espérance de la porosité pour la cellule sélectionnée et pour le faciès $A_i$ est (étape 306a) :

$$Esp\big( \varphi_{c,A_i} \big) = \frac{\varphi_{c,A_i,min} + \varphi_{c,A_i,mode} + \varphi_{c,A_i,max}}{3}$$

De même, si la variable $NTG_{c,A_i}$ est considérée comme incertaine, il est fourni trois valeurs représentatives d'une distribution triangulaire de probabilité pour cette cellule sélectionnée et pour chaque faciès $A_i$ : une valeur minimale $NTG_{c,A_i,min}$, une valeur maximale $NTG_{c,A_i,max}$, et une valeur de mode $NTG_{c,A_i,mode}$. Dès lors, l'espérance de la valeur NTG pour la cellule sélectionnée et pour le faciès $A_i$ est (étape 306b) :

$$Esp\left(NTG_{c,A_i}\right) = \frac{NTG_{c,A_i,min} + NTG_{c,A_i,mode} + NTG_{c,A_i,max}}{3}$$

Enfin, si la variable $SO_{c,A_i}$ est considérée comme incertaine, il est fourni trois courbes de saturation en eau fonction de la profondeur z de la maille c, une courbe minimale, maximale et de mode, linéaires par morceaux et respectivement définies par une pluralité de points et par trois valeurs représentatives d'une distribution triangulaire de probabilité pour la valeur de la cote d'une interface eau-huile : une valeur minimale $z_{w,max}$, une valeur maximale $z_{w,min}$, et une valeur de mode $z_{w,mode}$. Dès lors, l'espérance de la valeur SO pour la cellule sélectionnée est (étape 306c) calculée comme indiqué ci-avant.

Une distribution de probabilité $p(z_g)$ de la cote $z_g$ huile-gaz peut également être fournie.

La valeur déterminée à l'étape 305 et à l'étape 306a et/ou 306b et/ou 306c peut être utilisée pour calculer une valeur d'espérance de la variable HuPhiSo. Cette espérance peut alors être associée à cette cellule.

Si toute les cellules du modèle ont une valeur d'espérance HuPhiSo associée (test 304, sortie KO), il est possible de sommer (étape 307) les espérances d'HuPhiSo des cellules appartenant à une même colonne afin d'obtenir une espérance d'HuPhiSo colonne pour ladite colonne considérée.

Cette carte 308 est alors fournie à un opérateur pour visualisation et/ou traitement ultérieur.

## DETERMINATION DE LA VARIANCE

Par ailleurs, la variance des valeurs HuPhiSo colonne peut s'exprimer sous la forme :

$$Var(HuPhiSo_{colonne}) = Esp\left(HuPhiSo_{colonne}^{2}\right) - Esp(HuPhiSo_{colonne})^{2}$$

Le calcul du terme $Esp(HuPhiSo_{colonne})$ et donc de $Esp(HuPhiSo_{colonne})^2$ est détaillé ci-dessus et celle-ci peut être calculée pour le calcul de la variance.

La formule ci-dessous fait l'hypothèse que, géologiquement, les variables $\varphi_{c,A_i}$, $NTG_{c,A_i}$ et $SO_{c,A_i}$ sont des variables indépendantes :

$$Esp(HuPhiSo^2)$$

$$= \sum_A \sum_{B=A} \sum_{c1} \sum_{c2=c1} h_{c1}h_{c2} \cdot Esp(\mathbf{1}_A(c1)\mathbf{1}_B(c2)) \cdot Esp(\varphi_{c1,A}\varphi_{c2,B})$$
$$\cdot Esp(NTG_{c1,A}NTG_{c2,B}) \cdot Esp(So_{c1,A}So_{c2,B})$$
$$+ \sum_A \sum_{B\neq A} \sum_{c1} \sum_{c2=c1} h_{c1}h_{c2} \cdot Esp(\mathbf{1}_A(c1)\mathbf{1}_B(c2)) \cdot Esp(\varphi_{c1,A}\varphi_{c2,B})$$
$$\cdot Esp(NTG_{c1,A}NTG_{c2,B}) \cdot Esp(So_{c1,A}So_{c2,B})$$
$$+ \sum_A \sum_{B=A} \sum_{c1} \sum_{c2\neq c1} h_{c1}h_{c2} \cdot Esp(\mathbf{1}_A(c1)\mathbf{1}_B(c2)) \cdot Esp(\varphi_{c1,A}\varphi_{c2,B})$$
$$\cdot Esp(NTG_{c1,A}NTG_{c2,B}) \cdot Esp(So_{c1,A}So_{c2,B})$$
$$+ \sum_A \sum_{B\neq A} \sum_{c1} \sum_{c2\neq c1} h_{c1}h_{c2} \cdot Esp(\mathbf{1}_A(c1)\mathbf{1}_B(c2)) \cdot Esp(\varphi_{c1,A}\varphi_{c2,B})$$
$$\cdot Esp(NTG_{c1,A}NTG_{c2,B}) \cdot Esp(So_{c1,A}So_{c2,B})$$

avec A, B un faciès (éventuellement identique) parmi les différents faciès possible, et c1, c2 une cellule (éventuellement identique) de la colonne considérée pour le calcul du HuPhiSO colonne.

La première somme quadruple correspond aux termes où les faciès A et B sont identiques et les cellules c1 et c2 sont identiques, la deuxième somme correspond aux termes où les faciès A et B sont différents mais les cellules c1 et c2 identiques, la troisième somme correspond aux cas où les faciès A et B sont les mêmes mais les cellules c1 et c2 différentes et enfin la dernière somme correspond aux cas où les faciès A et B sont différents et les cellules c1 et c2 aussi.

Il est fait l'hypothèse géologique qu'il ne peut pas y avoir deux faciès différents dans la même cellule, soit :

$$Esp\big(\mathbf{1}_A(c1) \cdot \mathbf{1}_B(c2)\big) = 0 \; si \; c1 = c2 \; et \; A \neq B$$

Ainsi :

$$Esp(HuPhiSo^2)$$

$$= \sum_c \sum_A h_c{}^2 \cdot Esp(1_A(c)^2) \cdot Esp(\varphi_{c,A}{}^2) \cdot Esp(NTG_{c,A}{}^2) \cdot Esp(So_{c,A}{}^2)$$

$$+ \sum_A \sum_{c1} \sum_{c2 \neq c1} h_{c1} h_{c2} \cdot Esp(\mathbf{1}_A(c1)\mathbf{1}_A(c2)) \cdot Esp(\varphi_{c1,A}\varphi_{c2,A})$$

$$\cdot Esp(NTG_{c1,A}NTG_{c2,A}) \cdot Esp(So_{c1,A}So_{c2,A})$$

$$+ \sum_A \sum_{B \neq A} \sum_{c1} \sum_{c2 \neq c1} h_{c1} h_{c2} \cdot Esp(\mathbf{1}_A(c1)\mathbf{1}_B(c2)) \cdot Esp(\varphi_{c1,A}\varphi_{c2,B})$$

$$\cdot Esp(NTG_{c1,A}NTG_{c2,B}) \cdot Esp(So_{c1,A}So_{c2,B})$$

Cette somme fait apparaitre un certain nombre de termes identiques qu'il est possible de regrouper afin de diminuer le temps de calcul nécessaire.

Si la colonne considérée comporte n cellules et s'il existe N faciès possible (ceux-ci étant alors indexés), il est possible d'écrire :

$$Esp(HuPhiSo^2)$$

$$= \sum_c \sum_A \left[ h_c{}^2 \cdot Esp(\varphi_{c,A}{}^2) \cdot Esp(NTG_{c,A}{}^2) \cdot Esp(So_{c,A}{}^2) \right.$$

$$\left. \cdot \sum_{AE} Esp(\boldsymbol{p}_{AE}(c)) \cdot Esp\left(\boldsymbol{p}_{A,AE}(c)\right) \right]$$

$$+ 2 \sum_{A=1}^{N} \sum_{c1=1}^{n-1} \sum_{c2=c1+1}^{n} \left[ h_{c1}h_{c2}Esp(\mathbf{1}_A(c1)\mathbf{1}_A(c2)) \cdot Esp(\varphi_{c1,A}\varphi_{c2,A}) \right.$$

$$\cdot Esp(NTG_{c1,A}NTG_{c2,A}) \cdot Esp(So_{c1,A}So_{c2,A})$$

$$\left. \cdot \sum_{AE1} \sum_{AE2} Esp(\mathbf{1}_{AE1}(c1)\mathbf{1}_{AE2}(c2)) \cdot Esp\left(\mathbf{1}_{A,AE1}(c1)\mathbf{1}_{A,AE2}(c2)\right) \right]$$

$$+ 2 \sum_{c1=1}^{n-1} \sum_{c2=c1+1}^{n} \sum_{A=1}^{N} \sum_{B\neq A}^{N} \left[ h_{c1}h_{c2}Esp(\mathbf{1}_A(c1)\mathbf{1}_B(c2)) \cdot Esp(\varphi_{c1,A}\varphi_{c2,B}) \right.$$

$$\cdot Esp(NTG_{c1,A}NTG_{c2,B}) \cdot Esp(So_{c1,A}So_{c2,B})$$

$$\left. \cdot \sum_{AE1} \sum_{AE2} Esp(\mathbf{1}_{AE1}(c1)\mathbf{1}_{AE2}(c2)) \cdot Esp\left(\mathbf{1}_{A,AE1}(c1)\mathbf{1}_{B,AE2}(c2)\right) \right]$$

Le terme $\sum_{AE}Esp(\boldsymbol{p}_{AE}(c))\cdot Esp(\boldsymbol{p}_{A,AE}(c))$ a été calculé précédemment et, suite aux simplifications géologiques apportées, vaut :

$$\sum_{AE} \frac{\boldsymbol{p}_{AE}(c) \cdot (\boldsymbol{p}_{A,AE.min}(c) + \boldsymbol{p}_{A,AE.mode}(c) + \boldsymbol{p}_{A,AE.max}(c)}{3}$$

Le terme $Esp(1_{AE1}(c1)1_{AE2}(c2))$ peut s'exprimer comme suit s'il est fait l'hypothèse géologique selon laquelle les incertitudes concernant les éléments architecturaux ne sont que horizontales (il n'existe pas d'incertitudes verticales) :

$$Esp\left(\mathbf{1}_{AE1}(c1) \cdot \mathbf{1}_{AE2}(c2)\right)$$
$$= \begin{cases} \boldsymbol{p}_{AE1}(c1) \cdot \boldsymbol{p}_{AE2}(c2) \text{ si au moins l'un des AE est certain} \\ \boldsymbol{p}_{AE}(c1) \text{ si les AE sont tous incertains et } AE1 = AE2 \\ 0 \text{ si les AE sont tous incertains et } AE1 \neq AE2 \end{cases}$$

C'est-à-dire :

$$Esp\left(\mathbf{1}_{AE1}(c1) \cdot \mathbf{1}_{AE2}(c2)\right) = \begin{cases} \boldsymbol{p}_{AE2}(c2) \, si \, (\boldsymbol{p}_{AE1}(c1) = 1) \\ \boldsymbol{p}_{AE1}(c1) \, si \, (\boldsymbol{p}_{AE2}(c1) = 1) \\ 0 \, si \, (\boldsymbol{p}_{AE1}(c1) = 0) \, ou \, si \, (\boldsymbol{p}_{AE2}(c2) = 0) \\ sinon \begin{cases} \boldsymbol{p}_{AE}(c1) \, si \, AE1 = AE2 \\ 0 \, si \, AE1 \neq AE2 \end{cases} \end{cases}$$

Dès lors, nous avons :

$$\sum_{AE1} \sum_{AE2} Esp\big(\mathbf{1}_{AE1}(c1) \cdot \mathbf{1}_{AE2}(c2)\big) \cdot Esp\left(\mathbf{1}_{A,AE1}(c1) \cdot \mathbf{1}_{B,AE2}(c2)\right)$$

$$= \sum_{AE1} Esp\big(\mathbf{1}_{AE1}(c1) \cdot \mathbf{1}_{AE1}(c2)\big) \cdot Esp\left(\mathbf{1}_{A,AE1}(c1) \cdot \mathbf{1}_{B,AE1}(c2)\right)$$

$$+ \sum_{AE1} \sum_{AE2 \neq AE1} Esp\big(\mathbf{1}_{AE1}(c1) \cdot \mathbf{1}_{AE2}(c2)\big) \cdot Esp\left(\mathbf{1}_{A,AE1}(c1) \cdot \mathbf{1}_{B,AE2}(c2)\right)$$

Il est supposé que, géologiquement, les indicatrices de faciès de deux cellules situées dans des éléments architecturaux différents sont indépendantes entre elles. Ainsi, pour AE1≠AE2 :

$$Esp\left(\mathbf{1}_{A,AE1}(c1) \cdot \mathbf{1}_{B,AE2}(c2)\right) = Esp\left(\mathbf{1}_{A,AE1}(c1)\right) \cdot Esp\left(\mathbf{1}_{B,AE2}(c2)\right)$$

$$= Esp\left(\boldsymbol{p}_{A,AE1}(c1)\right) \cdot Esp\left(\boldsymbol{p}_{B,AE2}(c2)\right)$$

Par ailleurs, après certaines considérations géologiques, pour AE1=AE2, il est possible d'écrire, si les faciès sont identiques (i.e. A=B) :

$$Esp\left(\mathbf{1}_{A,AE}(c1) \cdot \mathbf{1}_{A,AE}(c2)\right)$$

$$= \big(1 - \rho(A, \Delta z)\big)$$

$$\cdot \left(Esp(p_{A,AE,c1}) \cdot Esp(p_{A,AE,c2}) + \sqrt{Var(p_{A,AE,c1}) \cdot Var(p_{A,AE,c2})}\right)$$

$$+ \rho(A, \Delta z) \cdot \left(\frac{1}{2} Esp(p_{A,AE,c1}) + \frac{1}{2} Esp(p_{A,AE,c2})\right)$$

avec $\rho(A,\Delta z)$ la fonction « corrélogramme » du faciès A (notée également $\rho_A(\Delta z)$ ou $\rho_A(c1,c2)$ et définie ci-après) et $\Delta z$ la différence de cotes verticales selon l'axe vertical z (i.e. l'axe de la colonne) entre les cellules $c_1$ et $c_2$.

De plus, pour des faciès différents (i.e. A≠B), il est possible d'écrire :

$$Esp\left(\mathbf{1}_{A,AE}(c1) \cdot \mathbf{1}_{B,AE}(c2)\right)$$

$$= \left(Esp(p_{A,AE}) \cdot Esp(p_{B,AE}) \mp \sqrt{Var(p_{A,AE}(c1)) \cdot Var(p_{B,AE}(c2))}\right)$$

$$\cdot \big(1 - \rho(A, \Delta z)\big)$$

On appelle variogramme d'une variable aléatoire X, la fonction y :

$$\gamma(X,h) = \frac{1}{2} \cdot Esp\left((X(u+h) - X(u))^2\right)$$

Ce variogramme $\gamma$ représente la structuration spatiale de la covariance entre la variable X en un point de l'espace et la même variable X en un autre point.

Le plus souvent, les variogrammes $\gamma$ d'une variable aléatoire réelle respectent les conditions suivantes :

- Le variogramme $\gamma$ est une fonction croissante de la distance, ce qui signifie que plus deux points sont éloignés et moins les données en ces points sont corrélées.

- Au-delà d'une distance $R_\gamma$ (également appelée « range » en anglais), le variogramme $\gamma$ a atteint sa valeur asymptotique (ou presque, soit 95% de cette valeur), ce qui signifie que la structuration spatiale des données n'existe que jusqu'à cette distance caractéristique $R_\gamma$ ; au-delà de cette distance $R_\gamma$ les données ne sont plus corrélées.

- Pour une distance nulle, le variogramme $\gamma$ est nul, ce qui veut dire que la corrélation entre les données est parfaite pour deux points très proches l'un de l'autre.

On appelle le corrélogramme $\rho$ la covariance normalisée :

$$\rho(X, h) = \frac{Cov(X(u + h), X(u))}{Cov(X(u), X(u))} = 1 - \frac{\gamma(X, h)}{Cov(X(u), X(u))}$$

Le plus souvent, pour une variable aléatoire réelle X donnée (comme le faciès), le corrélogramme peut être modélisé sous la forme ($R_\gamma$ étant une valeur prédéterminée) :

- d'un corrélogramme exponentiel :

$$\rho(h) = \exp\left(-\frac{3h}{R_\gamma}\right)$$

- d'un corrélogramme sphérique :

$$\rho(h) = \begin{cases} 1 - \frac{3}{2} \cdot \frac{h}{R_\gamma} + \frac{1}{2} \cdot \left(\frac{h}{R_\gamma}\right)^3 & si\ h < R_\gamma \\ 0\ sinon \end{cases}$$

- d'un corrélogramme gaussien :

$$\rho(h) = \begin{cases} \exp\left(-\left(\frac{3h}{R_\gamma}\right)^2\right) & si\ h < R_\gamma \\ 0\ sinon \end{cases}$$

Comme mentionné ci-dessus, géologiquement, les cellules de même faciès peuvent se répartir par blocs, qui sont souvent le résultat de l'histoire de l'environnement sédimentaire auquel ils appartiennent.

Par exemple, pour un environnement sédimentaire de type chenal en milieu marin (sables, turbidites), les coulées de sable peuvent avoir provoqué la formation de lobes de sable. Ces lobes seront modélisés par le géologue comme un groupe de cellules de faciès sableux.

Cette tendance qu'ont les cellules de même faciès à se regrouper par groupes, de même forme et de même taille moyenne, définit une corrélation spatiale des faciès. Une cellule proche d'une autre cellule a ainsi plus de chance de faire partie du même faciès que cette dernière. Il est possible de modéliser cette corrélation spatiale avec les variogrammes ou un corrélogramme :

$$Cov(1_A(c1), 1_A(c2)) = \rho_A(c1, c2) \cdot Var(1_A(c1)) \cdot Var(1_A(c2))$$

Les valeurs $R_\gamma$ ou « ranges » (voir ci-dessus) des faciès (dans les trois dimensions de l'espace) sont les dimensions des formes géologiques observées sur le terrain, dans un élément architectural donné. Un variogramme ou un corrélogramme des faciès peut donc être défini par élément architectural.

Si les indicatrices de faciès sont corrélées spatialement via les variogrammes, les proportions de faciès peuvent être, quant à elles, parfaitement corrélées entre elles.

Pour le calcul du HuPhiSo, les variogrammes peuvent être des données d'entrée. On utilise notamment les variogramme pour corréler spatialement les variables NTG et Phi.

Géologiquement, les corrélations spatiales peuvent s'appliquer qu'à la partie stochastique (noté $X_{stoch}$) des variables aléatoires (X), les incertitudes sur la moyenne étant alors parfaitement corrélées entre elles.

De plus, les corrélations entre les porosités ou les variables NTG pour deux cellules différentes se font dans un même faciès. Ainsi, il n'y a corrélation entre deux porosités ou variables NTG, dans deux cellules différentes, que pour les mêmes faciès. Pour deux faciès différents, les parties stochastiques des variables NTG et Phi peuvent être indépendantes.

Il est alors possible de calculer les covariances entre les variables stochastiques pour deux cellules différentes et le même faciès :

$$Cov\big(NTG_{stoch}(c1), NTG_{stoch}(c2)\big) = \rho_{NTG}(c1,c2) \cdot Var\big(NTG_{stoch}(c1)\big) \cdot Var\big(NTG_{stoch}(c2)\big)$$

$$Cov\big(\varphi_{stoch}(c1), \varphi_{stoch}(c2)\big) = \rho_\varphi(c1,c2) \cdot Var\big(\varphi_{stoch}(c1)\big) \cdot Var\big(\varphi_{stoch}(c2)\big)$$

ou $\rho_{NTG}$ est le corrélogramme vertical de la variable NTG et $\rho_\varphi$ est le corrélogramme vertical de la variable Phi.

Concernant le terme $Esp(\varphi_{c,A}{}^2)$, il est possible d'écrire, après certaines considérations géologiques, que $Esp(\varphi_{c,A}{}^2) = Esp(\varphi_{c,A})^2 + Var(\varphi_{c,A,moy}) + Var(\varphi_{c,A,stoch})$.

Il en va de même pour la variable NTG et ainsi $Esp(NTG_{c,A}{}^2) = Esp(NTG_{c,A})^2 + Var(NTG_{c,A,moy}) + Var(NTG_{c,A,stoch})$.

Concernant l'espérance du produit de la porosité pour un même faciès et deux cellules différentes, il est possible d'écrire, après certaines considérations géologiques (notamment en considérant qu'il existe une corrélation parfaite entre les incertitudes sur la moyenne la partie moyenne du corrélogramme de la variable Phi) :

$$Esp\big(\varphi_{c1,A} \cdot \varphi_{c2,A}\big) = Esp\big(\varphi_{c1,A}\big) \cdot Esp\big(\varphi_{c2,A}\big) + \sqrt{Var\big(\varphi_{c1,A,inc}\big) \cdot Var\big(\varphi_{c2,A,inc}\big)} + \rho_{\varphi stoch}\sqrt{Var\big(\varphi_{c1,A,stoch}\big) \cdot Var\big(\varphi_{c2,A,stoch}\big)}$$

ou $\rho_{\varphi stoch}$ est la partie stochastique du corrélogramme de la variable Phi (voir plus haut) et $\varphi_{c1,A,inc}$ est l'incertitude sur la moyenne (i.e. si la distribution de $\varphi_{c1,A}$ est triangulaire de borne minimal a, de borne maximale c et de mode b, $\varphi_{c1,A,inc} = \dfrac{a^2+b^2+c^2-ab-bc-ca}{18}$).

Il en va de même pour la variable NTG et ainsi :

$$Esp\big(NTG_{c1,A} \cdot NTG_{c2,A}\big) = Esp\big(NTG_{c1,A}\big) \cdot Esp\big(NTG_{c2,A}\big) + \sqrt{Var\big(NTG_{c1,A,inc}\big) \cdot Var\big(NTG_{c2,A,inc}\big)} + \rho_{NTG stoch} \cdot \sqrt{Var\big(NTG_{c1,A,stoch}\big) \cdot Var\big(NTG_{c2,A,stoch}\big)}$$

ou $\rho_{NTG stoch}$ est la partie stochastique du corrélogramme de la variable NTG (voir plus haut).

De même, si A≠B, alors il est possible d'écrire :

$$Esp(\varphi_{c1,A} \cdot \varphi_{c2,B}) = Esp(\varphi_{c1,A}) \cdot Esp(\varphi_{c2,B}) + \sqrt{Var(\varphi_{c1,A,inc}) \cdot Var(\varphi_{c2,B,inc})}$$

$$Esp(NTG_{c1,A} \cdot NTG_{c2,B})$$
$$= Esp(NTG_{c1,A}) \cdot Esp(NTG_{c2,B}) + \sqrt{Var(NTG_{c1,A,inc}) \cdot Var(NTG_{c2,B,inc})}$$

Ainsi, en réutilisant les notations ci-dessus :

$$Esp(S_{HC}(z)^2) = \frac{1}{6}\Big(Esp(S_{HC,min}(z)^2) + Esp(S_{HC,mode}(z)^2) + Esp(S_{HC,max}(z)^2)$$
$$+ Esp\left(S_{HC,min}(z) \cdot S_{HC,mode}(z)\right) + Esp\left(S_{HC,min}(z) \cdot S_{HC,max}(z)\right)$$
$$+ Esp\left(S_{HC,mode}(z) \cdot S_{HC,max}(z)\right)\Big)$$

A titre d'illustration, la valeur $Esp(S_{HC,XX1}(z) \cdot S_{HC,XX2}(z))$ peut être calculée (avec XX1 et XX2 parmi mode, min et max et avec XX1 et XX2 différents) comme suit :

$$Esp\left(S_{HC,XX1}(z) \cdot S_{HC,XX2}(z)\right)$$

$$= \sum_{i=1}^{n1-1} \left\{ \left[ -p_{1p} \cdot A1_{i,XX1} \cdot A1_{i,XX2} \cdot \frac{h1_{i+1}^4}{4} \right. \right.$$

$$+ \left\{ A1_{i,XX1} \cdot A1_{i,XX2} \cdot (p_{1p} \cdot z + p_{1c}) - p_{1p} \cdot (A1_{i,XX1} B1_{i,XX2} \right.$$

$$\left. + A1_{i,XX2} B1_{i,XX1}) \right\} \cdot \frac{h1_{i+1}^3}{3}$$

$$+ \left\{ (A1_{i,XX1} B1_{i,XX2} + A1_{i,XX2} B1_{i,XX1}) \cdot (p_{1p} \cdot z + p_{1c}) \right\} \cdot \frac{h1_{i+1}^2}{2} - p_{1c}$$

$$\left. \cdot B1_{i,XX1} \cdot B1_{i,XX2} \cdot h1_{i+1} \right]$$

$$- \left[ -p_{1p} \cdot A1_{i,XX1} \cdot A1_{i,XX2} \cdot \frac{h1_i^4}{4} \right.$$

$$+ \left\{ A1_{i,XX1} \cdot A1_{i,XX2} \cdot (p_{1p} \cdot z + p_{1c}) - p_{1p} \cdot (A1_{i,XX1} B1_{i,XX2} \right.$$

$$\left. + A1_{i,XX2} B1_{i,XX1}) \right\} \cdot \frac{h1_i^3}{3}$$

$$+ \left\{ (A1_{i,XX1} B1_{i,XX2} + A1_{i,XX2} B1_{i,XX1}) \cdot (p_{1p} \cdot z + p_{1c}) \right\} \cdot \frac{h1_i^2}{2} - p_{1c}$$

$$\left. \left. \cdot B1_{i,XX1} \cdot B1_{i,XX2} \cdot h1_i \right] \right\}$$

$$+ \sum_{i=1}^{n2-1} \left\{ \left[ -p_{2p} \cdot A2_{i,XX1} \cdot A2_{i,XX2} \cdot \frac{h2_{i+1}^4}{4} \right. \right.$$

$$+ \left\{ A2_{i,XX1} \cdot A2_{i,XX2} \cdot (p_{2p} \cdot z + p_{2c}) - p_{2p} \cdot (A2_{i,XX1} B2_{i,XX2} \right.$$

$$\left. + A2_{i,XX2} B2_{i,XX1}) \right\} \cdot \frac{h2_{i+1}^3}{3}$$

$$+ \left\{ (A2_{i,XX1} B2_{i,XX2} + A2_{i,XX2} B2_{i,XX1}) \cdot (p_{2p} \cdot z + p_{2c}) \right\} \cdot \frac{h2_{i+1}^2}{2} - p_{2c}$$

$$\left. \cdot B2_{i,XX1} \cdot B2_{i,XX2} \cdot h2_{i+1} \right]$$

$$- \left[ -p_{2p} \cdot A2_{i,XX1} \cdot A2_{i,XX2} \cdot \frac{h2_i^4}{4} \right.$$

$$+ \left\{ A2_{i,XX1} \cdot A2_{i,XX2} \cdot (p_{2p} \cdot z + p_{2c}) - p_{2p} \cdot (A2_{i,XX1} B2_{i,XX2} \right.$$

$$\left. + A2_{i,XX2} B2_{i,XX1}) \right\} \cdot \frac{h2_i^3}{3}$$

$$+ \left\{ (A2_{i,XX1} B2_{i,XX2} + A2_{i,XX2} B2_{i,XX1}) \cdot (p_{2p} \cdot z + p_{2c}) \right\} \cdot \frac{h2_i^2}{2} - p_{2c}$$

$$\left. \left. \cdot B2_{i,XX1} \cdot B2_{i,XX2} \cdot h2_i \right] \right\}$$

Par ailleurs, avec $z_1$ différent de $z_2$ :

$$Esp\left(S_{HC,A}(z_1) \cdot S_{HC,B}(z_2)\right)$$

$$= \frac{1}{6}\left(E\left(S_{HC,A,min}(z_1) \cdot S_{HC,B,min}(z_2)\right) + E\left(S_{HC,A,mode}(z_1) \cdot S_{HC,B,mode}(z_2)\right)\right.$$

$$\left. + E\left(S_{HC,A,max}(z_1) \cdot S_{HC,B,max}(z_2)\right)\right)$$

$$+ \frac{1}{12}\left(E\left(S_{HC,A,min}(z_1) \cdot S_{HC,B,mode}(z_2)\right) + E\left(S_{HC,A,mode}(z_1) \cdot S_{HC,B,min}(z_2)\right)\right.$$

$$+ E\left(S_{HC,A,min}(z_1) \cdot S_{HC,B,max}(z_2)\right) + E\left(S_{HC,A,max}(z_1) \cdot S_{HC,B,min}(z_2)\right)$$

$$\left. + E\left(S_{HC,A,mode}(z_1) \cdot S_{HC,B,max}(z_2)\right) + E\left(S_{HC,A,max}(z_1) \cdot S_{HC,B,mode}(z_2)\right)\right)$$

Chacun des termes de cette formule peut se calculer comme suit (avec XX1 et XX2 parmi mode, min et max) :

$$E\left(S_{HC,A,XX1}(z_1) \cdot S_{HC,B,XX2}(z_2)\right)$$

$$= \sum_{i=1}^{n1} \int_{z_{w,i}}^{z_{w,i+1}} \left(p_{1p} \cdot z_w + p_{1c}\right) \cdot \left(A1_{i,XX1} \cdot (z_1 - z_w) + B1_{i,XX1}\right)$$

$$\cdot \left(A2_{i,XX2} \cdot (z_2 - z_w) + B2_{i,XX2}\right) \cdot dz_w$$

$$+ \sum_{i=2}^{n2} \int_{z_{w,i}}^{z_{w,i+1}} \left(p_{2p} \cdot z_w + p_{2c}\right) \cdot \left(A1_{i,XX1} \cdot (z_1 - z_w) + B1_{i,XX1}\right)$$

$$\cdot \left(A2_{i,XX2} \cdot (z_2 - z_w) + B2_{i,XX2}\right) \cdot dz_w$$

De plus :

$$Esp\left(So_{c,A}\right) = Esp\left(S_{HC,A}(c)\right) \cdot Esp(\mathbf{1}_{OW}(c))$$

$$Esp\left(So_{c,A}{}^2\right) = Esp\left(S_{HC,A}(c)^2\right) \cdot Esp(\mathbf{1}_{OW}(c))$$

et

$$Esp\left(So_{c1,A} \cdot So_{c2,B}\right) = Esp\left(S_{HC,A}(c1) \cdot S_{HC,B}(c2)\right) \cdot Esp(\mathbf{1}_{OW}(c1) \cdot \mathbf{1}_{OW}(c2))$$

sachant que :

$$Esp\left(\mathbf{1}_{OW}(z_1) \cdot \mathbf{1}_{OW}(z_2)\right) = Esp\left(\mathbf{1}_{OW}(Max(z_1, z_2))\right)$$

En outre, il peut exister certaines incertitudes quant à la position des structures dans le réservoir, pouvant ainsi modifier les cartes « HuPhiSo » (de variance ou d'espérance).

Ces incertitudes peuvent être liées

- aux erreurs et à l'imprécision des mesures, par exemple concernant la position et l'orientation des surfaces. Cette incertitude concerne principalement la géométrie des structures ;
- à la variabilité naturelle des objets géologiques, plus ou moins importante selon les objets géologiques (ex. la variabilité naturelle d'une surface de faille est beaucoup plus faible que celle d'une surface de minéralisation d'un gisement d'uranium) ;
- au manque de connaissances, sur l'existence d'une structure par exemple.

Il est possible de prendre en compte ces incertitudes en les intégrant à l'incertitude sur la position de l'interface huile-eau mentionné plus haut.

En reprenant les notations précédentes, il est possible de considérer que l'incertitude de l'interface huile-eau suit une distribution triangulaire (incertitude mentionnée précédemment) mais auxquelles s'ajoute une incertitude de distribution normale de déviation $\sigma(z)$ (liée à l'incertitude de la structure).

Sous hypothèses géologiques, le terme :

$$\int_{z_{w,max}}^{z_{w,min}} \frac{cs_{HC,XXX}(z - z_w)}{3} p(z_w) \cdot dz_w$$

(mentionné ci-dessus) peut être remplacé par, un changement de variable $h = z - z_w$ ayant été effectuée :

$$\int_{z-3\sigma(z)}^{z+3\sigma(z)} \int_{z-z_{w,mode}}^{z-z_{w,max}} \left(p_{1p} \cdot (z' - h) + p_{1c}\right) \cdot \frac{cs_{HC,XXX}(h)}{3} \cdot dh \cdot \left(\frac{e^{-\frac{1}{2}\left(\frac{z'}{\sigma(z)}\right)^2}}{2\pi\sigma(z)}\right) dz'$$

$$+ \int_{z-3\sigma(z)}^{z+3\sigma(z)} \int_{z-z_{w,min}}^{z-z_{w,mode}} \left(p_{2p} \cdot (z' - h) + p_{2c}\right) \cdot \frac{cs_{HC,XXX}(h)}{3} \cdot dh$$

$$\cdot \left(\frac{e^{-\frac{1}{2}\left(\frac{z'}{\sigma(z)}\right)^2}}{2\pi\sigma(z)}\right) dz'$$

Ainsi, en reprenant les notations précédentes, il est possible de remplacer :

$$\int_{z_{w,max}}^{z_{w,min}} \frac{cs_{HC,XXX}(z - z_w)}{3} p(z_w) \cdot dz_w$$

par :

$$\int_{z-3\sigma(z)}^{z+3\sigma(z)} \left\{ \frac{1}{3} \sum_{i=1}^{n1-1} \left[ \left( -p_{1p} \cdot A1_{i,XXX} \cdot \frac{h1_{i+1}^3}{3} + \left( A1_{i,XXX} \cdot (p_{1c} + p_{1p} \cdot z') - p_{1p} \cdot B1_{i,XXX} \right) \right. \right. \right.$$

$$\left. \cdot \frac{h1_{i+1}^2}{2} + B1_{i,XXX} \cdot (p_{1c} + p_{1p} z') \cdot h1_{i+1} \right)$$

$$- \left( -p_{1p} \cdot A1_{i,XXX} \cdot \frac{h1_i^3}{3} + \left( A1_{i,XXX} \cdot (p_{1c} + p_{1p} \cdot z') - p_{1p} \cdot B1_{i,XXX} \right) \cdot \frac{h1_i^2}{2} \right.$$

$$\left. + B1_{i,XXX} \cdot (p_{1c} + p_{1p} z') \cdot h1_i \right) \Bigg]$$

$$+ \frac{1}{3} \sum_{i=1}^{n2-1} \left[ \left( -p_{2p} \cdot A2_{i,XXX} \cdot \frac{h2_{i+1}^3}{3} \right. \right.$$

$$+ \left( A2_{i,XXX} \cdot (p_{2c} + p_{2p} \cdot z') - p_{2p} \cdot B2_{i,XXX} \right) \cdot \frac{h2_{i+1}^2}{2} + B2_{i,XXX} \cdot (p_{2c}$$

$$\left. + p_{2p} z') \cdot h2_{i+1} \right)$$

$$- \left( -p_{2p} \cdot A2_{i,XXX} \cdot \frac{h2_i^3}{3} + \left( A2_{i,XXX} \cdot (p_{2c} + p_{2p} \cdot z') - p_{2p} \cdot B2_{i,XXX} \right) \cdot \frac{h2_i^2}{2} \right.$$

$$\left. \left. + B2_{i,XXX} \cdot (p_{2c} + p_{2p} z') \cdot h2_i \right) \Bigg] \right\} \left( \frac{e^{-\frac{1}{2}\left(\frac{z'}{\sigma(z)}\right)^2}}{2\pi\sigma(z)} \right) dz'$$

Par ailleurs, il est possible de calculer la variance de la valeur HuPhiSo prenant en compte les incertitudes sur la structure (ou $Var(HuPhiSo_{str\_inc})$, à partir de la valeur de la variance de cette valeur HuPhiSo sans incertitude (ou $Var(HuPhiSo)$ calculée précédemment) :

$$Var\left(HuPhiSo_{str\_inc}\right) = Var(HuPhiSo) + \left[ \frac{Esp\left(HuPhiSo_{str\_inc}\right)}{Esp(H_{str\_inc})} \right]^2 Var\left(H_{str\_inc}\right)$$

avec $H_{str\_inc}$ la hauteur de la colonne au-dessus de l'interface eau-huile.

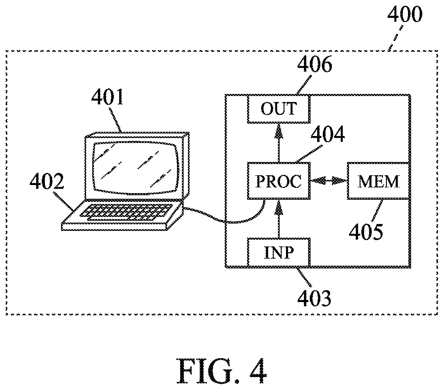

La figure 4 représente un exemple de dispositif de détermination d'une carte d'espérance de hauteur d'hydrocarbure liquide dans un mode de réalisation de l'invention.
Dans ce mode de réalisation, le dispositif comporte un ordinateur 400, comprenant une mémoire 405 pour stocker des instructions permettant la mise en oeuvre du procédé, les données de mesures reçues, et des données temporaires pour réaliser les différentes étapes du procédé tel que décrit précédemment.
L'ordinateur comporte en outre un circuit 404. Ce circuit peut être, par exemple :

- un processeur apte à interpréter des instructions sous la forme de programme informatique, ou

- une carte électronique dont les étapes du procédé de l'invention sont décrites dans le silicium, ou encore

- une puce électronique programmable comme une puce FPGA (pour « Field-Programmable Gate Array » en anglais).

Cet ordinateur comporte une interface d'entrée 403 pour la réception de données notamment les cubes de proportions nécessaires aux calculs de l'invention, et une interface de sortie 406 pour la fourniture des cartes d'espérance de la hauteur d'hydrocarbure liquide. Enfin, l'ordinateur peut comporter, pour permettre une interaction aisée avec un utilisateur, un écran 401 et un clavier 402. Bien entendu, le clavier est facultatif, notamment dans le cadre d'un ordinateur ayant la forme d'une tablette tactile, par exemple.

Par ailleurs, le schéma fonctionnel présenté sur la figure 3 est un exemple typique d'un programme dont certaines instructions peuvent être réalisées auprès de l'équipement décrit. A ce titre, la figure 3 peut correspondre à l'organigramme de l'algorithme général d'un programme informatique au sens de l'invention.

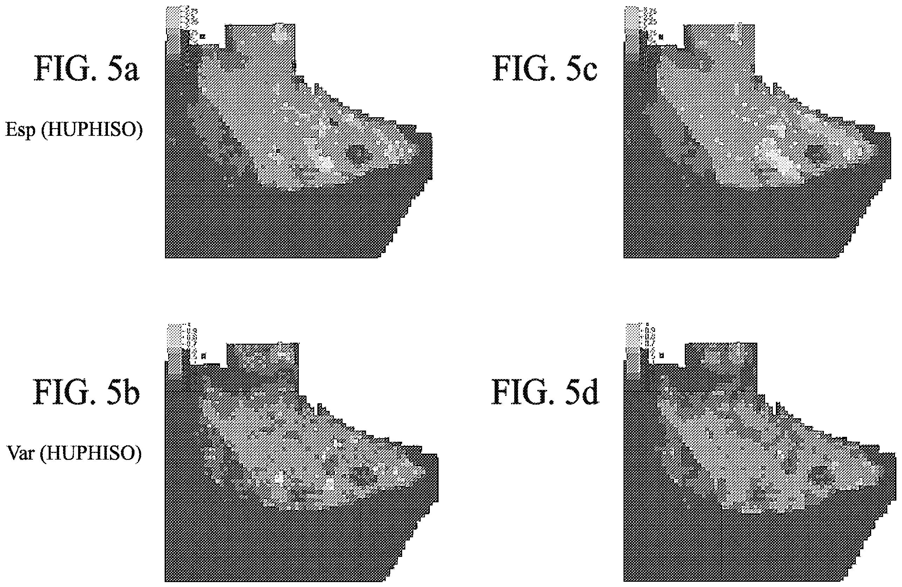

La figure 5a est un exemple de carte de l'espérance de la variable HuPhiSo pour un modèle maillé calculé à l'aide des méthodes de l'état de la technique connues (i.e. calcul à l'aide d'une pluralité de réalisations ou de « multi-réalisations », l'espérance de ces réalisations étant alors calculée).

La figure 5b est un exemple de carte de la variance de la variable HuPhiSo pour un modèle maillé calculé à l'aide des méthodes de l'état de la technique connues (multi-réalisations).

Le modèle maillé, considéré dans ces exemples, comporte 80000 mailles. L'incertitude concernant notamment sur les cubes de proportions, la porosité, les saturations en eau est prise en compte. Le calcul d'une centaine de réalisations prend environ 20h. Néanmoins, il est habituel de déterminer plutôt 2000 réalisations lors d'un tel calcul en « multi-réalisation » afin d'assurer une convergence correcte des résultats. Ainsi, le temps de calcul peut largement excéder 20h.

Pour ce même modèle et les mêmes prises en compte d'incertitudes, la figure 5c est un exemple de carte de l'espérance de la variable HuPhiSo déterminée à l'aide d'une méthode mettant en oeuvre un des modes de réalisation de l'invention. La figure 5d est un exemple de carte de la variance de la variable HuPhiSo déterminée à l'aide d'une méthode mettant en oeuvre un des modes de réalisation de l'invention.

Le calcul des cartes 5c et 5d à l'aide d'un des modes de réalisation de l'invention prend environ 2h pour un résultat tout à fait comparable aux cartes 5a et 5b (respectivement 2% de différences en moyenne et 0,5% de différences en moyenne).

**Revendications**

1. Procédé de détermination d'une carte d'espérance de hauteur d'hydrocarbure liquide dans un modèle géologique (100), le modèle géologique comportant des mailles (104, 105) pouvant être chacune associée à un faciès parmi une pluralité de faciès et à un élément architectural parmi une pluralité d'éléments architecturaux (101, 102, 103), le procédé comporte, pour au moins une colonne du modèle géologique :

   /a/ réception d'un cube de répartitions pour chaque élément architectural AE ($302_1$, ..., $302_m$) parmi la pluralité d'éléments architecturaux, le cube de répartitions décrivant pour chaque maille c du modèle la probabilité $p_{AE}(c)$ que ladite maille appartienne audit élément architectural,
   /b/ réception d'un cube de proportions pour chaque faciès parmi la pluralité de faciès et pour chaque élément architectural parmi la pluralité d'éléments architecturaux ($301_{1,1}$, $301_{2,1}$, ... $301_{n,m}$), le cube de proportions associé à un faciès A et à un élément architectural AE décrivant pour chaque maille c du modèle la proportion dudit faciès dans ladite maille si ladite maille appartient audit élément architectural AE, ladite proportion étant une variable aléatoire de distribution triangulaire (150) définie par une valeur minimale $p_{A,AE,min}(c)$, une valeur maximale $p_{A,AE,max}(c)$, et un mode $p_{A,AE,mode}(c)$,
   /c/ détermination (305), pour chaque maille c de ladite colonne et pour chaque faciès A de la pluralité de faciès, de la somme sur la pluralité d'éléments architecturaux de

   $$p_{AE}(c).\frac{1}{3}\Big(p_{A,AE,min}(c) + p_{A,AE,max}(c) + p_{A,AE,mode}(c)\Big).$$

   /d/ détermination d'une valeur d'espérance de hauteur d'hydrocarbure liquide pour ladite colonne (307) de manière analytique en fonction de la somme déterminée à l'étape /c/ pour chaque maille c de ladite colonne et pour chaque faciès A.

2. Procédé selon la revendication 1, dans lequel, chaque maille c du modèle étant associée à une proportion de porosité pour chacun des faciès de ladite pluralité de faciès, ladite proportion de porosité étant une variable aléatoire de distribution triangulaire définie par une valeur minimale $\varphi_{A,min}(c)$, une valeur maximale $\varphi_{A,max}(c)$, et un mode $\varphi_{A,min}(c)$, le procédé comprend en outre :
   /c-1/ détermination (306a), pour chaque maille c de ladite colonne et pour chaque faciès A parmi la pluralité de faciès, de la valeur $\frac{1}{3}\big(\varphi_{A,min}(c) + \varphi_{A,max}(c) + \varphi_{A,mode}(c)\big)$,

dans lequel, la détermination de l'étape /d/ est fonction de la valeur déterminée à l'étape /c-1/ pour chaque maille c de ladite colonne et pour chaque faciès A parmi la pluralité de faciès.

3. Procédé selon l'une des revendications précédentes, dans lequel, chaque maille c du modèle étant associée à une proportion de volume rocheux favorable à la présence d'hydrocarbures pour chacun des faciès de ladite pluralité de faciès, ladite proportion de volume rocheux favorable à la présence d'hydrocarbures étant une variable aléatoire de distribution triangulaire définie par une valeur minimale $NTG_{A,min}(c)$, une valeur maximale $NTG_{A,max}(c)$, et un mode $NTG_{A,mode}(c)$, le procédé comprend en outre :

/c-2/ détermination (306b), pour chaque maille c de ladite colonne et pour chaque faciès A parmi la pluralité de faciès, de la valeur $\frac{1}{3}\big(NTG_{A,min}(c) + NTG_{A,max}(c) + NTG_{A,mode}(c)\big)$,

dans lequel, la détermination de l'étape /d/ est fonction de la valeur déterminée à l'étape /c-2/ pour chaque maille c de ladite colonne et pour chaque faciès A parmi la pluralité de faciès.

4. Procédé selon l'une des revendications précédentes, dans lequel, chaque maille c du modèle étant associée à une saturation en hydrocarbure liquide, ladite saturation en hydrocarbure liquide étant **caractérisée par** une cote d'interface hydrocarbure liquide-eau $z_w$ ayant une probabilité $p(z_w)$ de distribution comprise entre une valeur maximale $z_{w,min}$, et une valeur minimale $z_{w,max}$, et par une distribution triangulaire de la saturation en hydrocarbures pour chaque cote h au-dessus de cette cote d'interface, ladite distribution de saturation en hydrocarbure étant définie par une valeur minimale $CS_{HC,A,min}(h)$, une valeur maximale $CS_{HC,A,max}(h)$, et un mode $CS_{HC,A,mode}(h)$, le procédé comprend en outre :

/c-3/ détermination (306c), pour chaque maille c de ladite colonne ayant une cote z et pour chaque faciès A parmi la pluralité de faciès, de la valeur

$$\int_{z_{w,max}}^{z_{w,min}} \frac{cs_{HC,min}(z - z_w) + cs_{HC,mode}(z - z_w) + cs_{HC,max}(z - z_w)}{3} p(z_w) \cdot dz_w$$

dans lequel, la détermination de l'étape /d/ est fonction de la valeur déterminée à l'étape /c-3/ pour chaque maille c de ladite colonne et pour chaque faciès A parmi la pluralité de faciès.

5. Procédé selon la revendication 4, dans lequel, ladite saturation en hydrocarbure liquide étant **caractérisée par** une cote d'interface hydrocarbure liquide-gaz $z_g$ ayant une probabilité $p(z_g)$, de distribution comprise entre une valeur maximale $z_{g,min}$, et une valeur minimale $z_{g,max}$, le procédé comprend en outre :

/c-4/ détermination, pour chaque maille c de ladite colonne ayant une cote z, de la valeur

$$\begin{cases} 0 \; si \; z \geq z_{g,min} \\ 1 - \int_{z_{g,max}}^{z} p(z_g) dz_g \; si \; z_{g,max} \leq z \leq z_{g,min} \\ 1 \; si \; z \leq z_{g,max} \end{cases}$$

dans lequel, la détermination de l'étape /d/ est fonction de la valeur déterminée à l'étape /c-3/ pour chaque maille c de cote z de ladite colonne et pour chaque faciès A parmi la pluralité de faciès, multipliée par la valeur déterminée à l'étape /c-4/ pour chaque maille c de cote z de ladite colonne.

6. Procédé de détermination d'une carte de variance de hauteur d'hydrocarbure liquide dans un modèle géologique, le procédé comporte, pour au moins une colonne du modèle géologique :

/e/ détermination d'une valeur d'espérance de hauteur d'hydrocarbure liquide dans le modèle géologique pour ladite colonne, selon la revendication 1 ;

/f/ détermination d'une valeur de variance de la hauteur d'hydrocarbure liquide pour ladite colonne de manière analytique en fonction de la somme déterminée à l'étape /e/.

**7.** Procédé selon la revendication 6, dans lequel, les valeurs des cubes de proportions pour deux mailles différentes du modèle et pour des éléments architecturaux différents sont considérées indépendantes entre elles.

**8.** Procédé selon l'une des revendications 6 ou 7, dans lequel, le procédé comporte en outre :

/g/ réception d'un corrélogramme $\rho(A,\Delta z)$ selon une direction de ladite colonne pour ledit faciès A dans un élément architectural donné ;

/h/ détermination de l'espérance du produit de la présence du faciès A dans ledit élément architectural dans une maille c1 par la présence du faciès A dans ledit élément architectural dans une maille c2, la distance entre c1 et c2 selon ladite direction du corrélogramme étant $\Delta z$, la probabilité de présence du faciès A dudit élément architectural pour la maille c1 étant $p_{A,AE,c1}$, la probabilité de présence du faciès A dudit élément architectural pour la maille c2 étant $p_{A,AE,c2}$, en fonction de :

$$\big(1 - \rho(A,\Delta z)\big) \cdot \left( Esp\big(p_{A,AE,c1}\big) \cdot Esp\big(p_{A,AE,c2}\big) + \sqrt{Var\big(p_{A,AE,c1}\big) \cdot Var\big(p_{A,AE,c2}\big)} \right)$$

$$+ \rho(A,\Delta z) \cdot \left( \frac{1}{2} Esp\big(p_{A,AE,c1}\big) + \frac{1}{2} Esp\big(p_{A,AE,c2}\big) \right)$$

dans lequel, la détermination de l'étape /f/ est fonction de la détermination de l'étape /h/.

**9.** Dispositif de détermination d'une carte d'espérance de hauteur d'hydrocarbure liquide dans un modèle géologique, le modèle géologique comportant des mailles pouvant être chacune associée à un faciès parmi une pluralité de faciès et à un élément architectural parmi une pluralité d'éléments architecturaux, le dispositif comporte, pour au moins une colonne du modèle géologique :

/a/ une interface pour la réception d'un cube de répartitions d'élément architectural pour chaque élément architectural AE parmi la pluralité d'éléments architecturaux, le cube de répartitions décrivant pour chaque maille c du modèle la probabilité $p_{AE}(c)$ que ladite maille appartienne audit élément architectural,

/b/ une interface pour la réception d'un cube de proportions pour chaque faciès parmi la pluralité de faciès et pour chaque élément architectural parmi la pluralité d'éléments architecturaux, le cube de proportions associé à un faciès A et à un élément architectural AE décrivant pour chaque maille c du modèle la proportion dudit faciès dans ladite maille si ladite maille appartient audit élément architectural AE, ladite proportion étant une variable aléatoire de distribution triangulaire définie par une valeur minimale $p_{A,AE,min}(c)$, une valeur maximale $p_{A,AE,max}(c)$, et un mode $p_{A,AE,mode}(c)$,

/c/ un circuit pour la détermination, pour chaque maille c de ladite colonne et pour chaque faciès A de la pluralité de faciès, de la somme sur la pluralité d'éléments architecturaux de

$$p_{AE}(c) . \frac{1}{3} \big( p_{A,AE,min}(c) + p_{A,AE,max}(c) + p_{A,AE,mode}(c) \big).$$

/d/ un circuit pour la détermination d'une valeur d'espérance de hauteur d'hydrocarbure liquide pour ladite colonne de manière analytique en fonction de la somme déterminée par le circuit /c/ pour chaque maille c de ladite colonne et pour chaque faciès A.

**10.** Produit programme informatique comportant des instructions pour la mise en oeuvre du procédé selon l'une des revendications 1 à 8, lorsque ce programme est exécuté par un processeur.

**Patentansprüche**

**1.** Verfahren zur Bestimmung einer Karte für eine zu erwartende Höhe von flüssigem Kohlenwasserstoff in einem geologischen Modell (100), wobei das geologische Modell Maschen (104, 105) aufweist, die jeweils mit einer Fazies von mehreren Fazies und einem Strukturelement von mehreren Strukturelementen (101, 102, 103) assoziiert sind, wobei das Verfahren für mindestens eine Säule des geologischen Modells aufweist:

/a/ Empfang eines Verteilungswürfels für jedes Strukturelement AE ($302_1$, ..., $302_m$) der mehreren Strukturelemente, wobei der Verteilungswürfel für jede Masche c des Modells die Wahrscheinlichkeit $p_{AE}(c)$, dass die Masche zu dem Strukturelement gehört, beschreibt,

/b/ Empfang eines Verhältniswürfels für jede Fazies der mehreren Fazies und für jedes Strukturelement der mehreren Strukturelemente ($301_{1,1}$, $301_{2,1}$ ... $301_{n,m}$), wobei der Verhältniswürfel, der mit einer Fazies A und einem Strukturelement AE assoziiert ist, für jede Masche c des Modells das Verhältnis der Fazies in der Masche beschreibt, falls die Masche zu dem Strukturelement AE gehört, wobei das Verhältnis eine Dreieckverteilung-Zufallsvariable (150) ist, die durch einen minimalen Wert $p_{A,AE,min}(c)$, einen maximalen Wert $p_{A,AE,max}(c)$ und einen Modus $p_{A,AE,mode}(c)$ definiert ist,

/c/ Bestimmung (305), für jede Masche c der Säule und für jede Fazies A der mehreren Fazies, der Summe über die mehreren Strukturelemente von

$$p_{AE}(c) * (1/3) \, (p_{A,AE,min}(c) + p_{A,AE,max}(c) + p_{A,AE,mode}(c))$$

/d/ Bestimmung eines Erwartungswerts für die Höhe von flüssigem Kohlenwasserstoff für die Säule (307) auf analytische Weise in Abhängigkeit von der in Schritt /c/ für jede Masche c der Säule und für jede Fazies A bestimmten Summe.

2. Verfahren nach Anspruch 1, in welchem jede Masche c des Modells mit einem Porositätsverhältnis für jede der Fazies der mehreren Fazies assoziiert ist, wobei das Porositätsverhältnis eine Dreieckverteilung-Zufallsvariable ist, die durch einen minimalen Wert $\varphi_{A,min}(c)$, einen maximalen Wert $\varphi_{A,max}(c)$ und einen Modus $\varphi_{A,mode}(c)$ definiert ist, wobei das Verfahren ferner aufweist:

/c-1/ Bestimmung (306a), für jede Masche c der Säule und für jede Fazies A der mehreren Fazies, des Werts $(1/3) \, (\varphi_{A,min}(c) + (\varphi_{A,max}(c) + (p_{A,mode}(c))$,
wobei die Bestimmung des Schritts /d/ abhängig von dem in Schritt /c-1/ für jede Masche c der Säule und für jede Fazies A der mehreren Fazies bestimmten Wert ist.

3. Verfahren nach einem der vorstehenden Ansprüche, in welchem jede Masche c des Modells mit einem Felsvolumenverhältnis, das günstig für das Vorhandensein von Kohlenwasserstoff ist, für jede der Fazies der mehreren Fazies assoziiert ist, wobei das für das Vorhandensein von Kohlenwasserstoff günstige Felsvolumenverhältnis eine Dreieckverteilung-Zufallsvariable ist, die durch einen minimalen Wert $NTG_{A,min}(c)$, einen maximalen Wert $NTG_{A,max}(c)$ und einen Modus $NTG_{A,mode}(c)$ definiert ist, wobei das Verfahren ferner aufweist:

/c-2/ Bestimmung (306b), für jede Masche c der Säule und für jede Fazies A der mehreren Fazies, des Werts $(1/3) \, (NTG_{A,min}(c) + NTG_{A,max}(c) + NTG_{A,mode}(c))$,
wobei die Bestimmung des Schritts /d/ abhängig von dem in Schritt /c-2/ für jede Masche c der Säule und für jede Fazies A der mehreren Fazies bestimmten Wert ist.

4. Verfahren nach einem der vorstehenden Ansprüche, in welchem jede Masche c des Modells mit einer Sättigung mit flüssigem Kohlenwasserstoff assoziiert ist, wobei die Sättigung mit flüssigem Kohlenwasserstoff charakterisiert ist durch eine Grenzflächenkote der Grenzfläche "flüssiger Kohlenwasserstoff-Wasser" $z_w$ mit einer Wahrscheinlichkeitsverteilung $p(z_w)$ zwischen einem maximalen Wert $z_{w,min}$ und einem minimalen Wert $z_{w,max}$ und durch eine Dreiecksverteilung der Kohlenwasserstoff-Sättigung für jede Kote h oberhalb dieser Grenzflächenkote, wobei die Verteilung der Kohlenwasserstoff-Sättigung durch einen minimalen Wert $CS_{HC,A,min}(h)$, einen maximalen Wert $CS_{HC,A,max}(h)$ und einen Modus $CS_{HC,A,mode}(h)$ definiert ist, wobei das Verfahren ferner aufweist:

/c-3/ Bestimmung (306c), für jede Masche c der Säule mit einer Kote z und für jede Fazies A der mehreren Fazies, des Werts

$$\int_{z_{w,max}}^{z_{w,min}} \frac{cs_{HC,min}(z - z_w) + cs_{HC,mode}(z - z_w) + cs_{HC,max}(z - z_w)}{3} p(z_w) \cdot dz_w$$

wobei die Bestimmung des Schritts /d/ abhängig von dem in Schritt /c-3/ für jede Masche c der Säule und für jede Fazies A der mehreren Fazies bestimmten Wert ist.

**5.** Verfahren nach Anspruch 4, in welchem die Sättigung mit flüssigem Kohlenwasserstoff charakterisiert ist durch eine Grenzflächenkote der Grenzfläche "flüssiger Kohlenwasserstoff-Gas" $z_g$ mit einer Wahrscheinlichkeitsverteilung $p(z_g)$ zwischen einem maximalen Wert $z_{g,min}$ und einem minimalen Wert $z_{g,max}$, wobei das Verfahren ferner aufweist:

/c-4/ Bestimmung, für jede Masche c der Säule mit einer Kote z, des Werts

$$\begin{cases} 0 \ si \ z \geq z_{g,min} \\ 1 - \int_{z_{g,max}}^{z} p(z_g)dz_g \ si \ z_{g,max} \leq z \leq z_{g,min} \\ 1 \ si \ z \ \leq \ z_{g,max} \end{cases}$$

wobei die Bestimmung des Schritts /d/ abhängig von dem in Schritt /c-3/ für jede Masche c der Kote z der Säule und für jede Fazies A der mehreren Fazies bestimmten Wert multipliziert mit dem in Schritt /c-4/ für jede Masche c der Kote z der Säule bestimmten Wert ist.

**6.** Verfahren zur Bestimmung einer Varianzkarte der Höhe von flüssigem Kohlenwasserstoff in einem geologischen Modell, wobei das Verfahren für mindestens eine Säule des geologischen Modells aufweist:

/e/ Bestimmung eines Erwartungswerts für die Höhe von flüssigem Kohlenwasserstoff in dem geologischen Modell für die Säule nach Anspruch 1;
/f/ Bestimmung eines Varianzwerts der Höhe von flüssigem Kohlenwasserstoff für die Säule auf analytische Weise in Abhängigkeit von der in Schritt /e/ bestimmten Summe.

**7.** Verfahren nach Anspruch 6, in welchem die Werte der Verhältniswürfel für zwei unterschiedliche Maschen des Modells und für unterschiedliche Strukturelemente als voneinander unabhängig betrachtet werden.

**8.** Verfahren nach einem der Ansprüche 6 oder 7, in welchem das Verfahren ferner aufweist:

/g/ Empfang eines Korrelogramms $\rho(A,\Delta z)$ gemäß einer Richtung der Säule für die Fazies A in einem gegebenen Strukturelement;
/h/ Bestimmung der Erwartung des Produkts des Vorhandenseins der Fazies A in dem Strukturelement in einer Masche c1 mit dem Vorhandensein der Fazies A in dem Strukturelement in einer Masche c2, wobei der Abstand zwischen c1 und c2 gemäß der Richtung des Korrelogramms $\Delta z$ ist, die Wahrscheinlichkeit des Vorhandenseins der Fazies A des Strukturelements für die Masche c1 $p_{A,AE,c1}$ ist, die Wahrscheinlichkeit des Vorhandenseins der Fazies A des Strukturelements für die Masche c2 $p_{A,AE,c2}$ ist, in Abhängigkeit von

$$\left(1 - \rho(A,\Delta z)\right) \cdot \left(Esp\left(p_{A,AE,c1}\right) \cdot Esp\left(p_{A,AE,c2}\right) + \sqrt{Var\left(p_{A,AE,c1}\right) \cdot Var\left(p_{A,AE,c2}\right)}\right)$$
$$+ \rho(A,\Delta z) \cdot \left(\frac{1}{2}Esp\left(p_{A,AE,c1}\right) + \frac{1}{2}Esp\left(p_{A,AE,c2}\right)\right)$$

wobei die Bestimmung des Schritts /f/ abhängig von der Bestimmung des Schritts /h/ ist.

**9.** Vorrichtung zur Bestimmung einer Karte für eine zu erwartende Höhe von flüssigem Kohlenwasserstoff in einem geologischen Modell, wobei das geologische Modell Maschen aufweist, die jeweils mit einer Fazies von mehreren Fazies und einem Strukturelement von mehreren Strukturelementen assoziiert sind, wobei die Vorrichtung für mindestens eine Säule des geologischen Modells aufweist:

/a/ eine Schnittstelle zum Empfang eines Strukturelement-Verteilungswürfels für jedes Strukturelement AE der mehreren Strukturelemente, wobei der Verteilungswürfel für jede Masche c des Modells die Wahrscheinlichkeit $p_{AE}(c)$, dass die Masche zu dem Strukturelement gehört, beschreibt,
/b/ eine Schnittstelle zum Empfang eines Verhältniswürfels für jede Fazies der mehreren Fazies und für jedes Strukturelement der mehreren Strukturelemente, wobei der Verhältniswürfel, der mit einer Fazies A und einem Strukturelement AE assoziiert ist, für jede Masche c des Modells das Verhältnis der Fazies in der Masche beschreibt, falls die Masche zu dem Strukturelement AE gehört, wobei das Verhältnis eine Dreieckverteilung-Zufallsvariable ist, die durch einen minimalen Wert $p_{A,AE,min}(c)$, einen maximalen Wert $p_{A,AE,max}(c)$ und einen Modus $p_{A,AE,mode}(c)$ definiert ist,

/c/ eine Schaltung zur Bestimmung, für jede Masche c der Säule und für jede Fazies A der mehreren Fazies, der Summe über die mehreren Strukturelemente von

$$p_{AE}(c) * (1/3) \left( p_{A,AE,min}(c) + p_{A,AE,max}(c) + p_{A,AE,mode}(c) \right)$$

,33

/d/ eine Schaltung zur Bestimmung eines Erwartungswerts für die Höhe von flüssigem Kohlenwasserstoff für die Säule auf analytische Weise in Abhängigkeit von der Summe, die von der Schaltung /c/ für jede Masche c der Säule und für jede Fazies A bestimmt worden ist.

10. Informatikprogrammprodukt, aufweisend Befehle zum Implementieren des Verfahrens nach einem der Ansprüche 1 bis 8, wenn dieses Programm von einem Prozessor ausgeführt wird.

**Claims**

1. Method for determining a map of expectation of height of liquid hydrocarbon in a geological model (100), the geological model comprising meshes (104, 105) that can be associated with a facies among a plurality of facies and with an architectural element among a plurality of architectural elements (101, 102, 103),

the method comprises, for at least one column of the geological model:

/a/ receiving an apportionment cube for each architectural element AE ($302_1$, ..., $302_m$) among the plurality of architectural elements, with the apportionment cube describing for each mesh c of the model the probability $p_{AE}(c)$ that said mesh belongs to said architectural element,

/b/ receiving a proportion cube for each facies among the plurality of facies and for each architectural element among the plurality of architectural elements ($301_{1,1}$, $301_{2,1}$, ... $301_{n,m}$), with the proportion cube associated with a facies A and with an architectural element AE describing for each mesh c of the model the proportion of said facies in said mesh if said mesh belongs to said architectural element AE, with said proportion being a random variable of triangular distribution (150) defined by a minimum value $p_{A,AE,min}(c)$, a maximum value $p_{A,AE,max}(c)$, and a mode $p_{A,AE,mode}(c)$,

/c/ determining (305), for each mesh c of said column and for each facies A of the plurality of facies, the sum over the plurality of architectural elements of

$$p_{AE}(c).\frac{1}{3}\left( p_{A,AE,min}(c) + p_{A,AE,max}(c) + p_{A,AE,mode}(c) \right).$$

/d/ determining a value of expectation of height of liquid hydrocarbon for said column (307) analytically according to the sum determined in the step /c/ for each mesh c of said column and for each facies A.

2. Method according to claim 1, wherein, with each mesh c of the model being associated with a proportion of porosity for each one of the facies of said plurality of facies, with said proportion of porosity being a random variable of triangular distribution defined by a minimum value $\varphi_{A,min}(c)$, a maximum value $\varphi_{A,max}(c)$, and a mode $\varphi_{A,mode}(c)$, the method further comprises:

/c-1/ determining (306a), for each mesh c of said column and for each facies A among the plurality of facies, the value $\frac{1}{3}\left( \varphi_{A,min}(c) + \varphi_{A,max}(c) + \varphi_{A,mode}(c) \right)$,

wherein, the determination of the step /d/ is a function of the value determined in the step /c-1/ for each mesh c of said column and for each facies A among the plurality of facies.

3. Method according to one of the preceding claims, wherein, with each mesh c of the model being associated with a proportion of rock volume favourable to the presence of hydrocarbons for each one of the facies of said plurality of facies, with said proportion of rock volume favourable to the presence of hydrocarbons being a random variable of triangular distribution defined by a minimum value $NTG_{A,min}(c)$, a maximum value $NTG_{A,max}(c)$, and a mode $NTG_{A,mode}(c)$, the method further comprises:

/c-2/ determining (306b), for each mesh c of said column and for each facies A among the plurality of facies, the value $\frac{1}{3}\left(NTG_{A,min}(c) + NTG_{A,max}(c) + NTG_{A,mode}(c)\right)$,

wherein, the determination of the step /d/ is a function of the value determined in the step /c-2/ for each mesh c of said column and for each facies A among the plurality of facies.

4. Method according to one of the preceding claims, wherein, with each mesh c of the model being associated with a liquid hydrocarbon saturation, said liquid hydrocarbon saturation being **characterised by** a liquid hydrocarbon-water interface dimension $z_w$ having a distribution probability $p(z_w)$ between a maximum value $z_{w,min}$, and a minimum value $z_{w,max}$, and by a triangular distribution of the hydrocarbon saturation for each dimension h above this interface dimension, said distribution of hydrocarbon saturation being defined by a minimum value $CS_{HC,A,min}(h)$, a maximum value $CS_{HC,A,max}(h)$, and a mode $CS_{HC,A,mode}(h)$, the method further comprises:

/c-3/ determining (306c), for each mesh c of said column having a dimension z and for each facies A among the plurality of facies, the value

$$\int_{z_{w,max}}^{z_{w,min}} \frac{cs_{HC,min}(z - z_w) + cs_{HC,mode}(z - z_w) + cs_{HC,max}(z - z_w)}{3} p(z_w) \cdot dz_w$$

wherein, the determination of the step /d/ is a function of the value determined in the step /c-3/ for each mesh c of said column and for each facies A among the plurality of facies.

5. Method according to claim 4, wherein, with said liquid hydrocarbon saturation being **characterised by** a liquid hydrocarbon-gas interface dimension $z_g$ having a probability $p(z_g)$, of distribution between a maximum value $z_{g,min}$, and a minimum value $z_{g,max}$, the method further comprises:

/c-4/ determining, for each mesh c of said column having a dimension z, the value

$$\begin{cases} 0 \; if \; z \geq z_{g,min} \\ 1 - \int_{z_{g,max}}^{z} p(z_g) dz_g \; if \; z_{g,max} \leq z \leq z_{g,min} \\ 1 \; if \; z \leq z_{g,max} \end{cases}$$

wherein, the determination of the step /d/ is a function of the value determined in the step /c-3/ for each mesh c of dimension z of said column and for each facies A among the plurality of facies, multiplied by the value determined in the step /c-4/ for each mesh c of dimension z of said column.

6. Method for determining a map of variance of height of liquid hydrocarbon in a geological model,
the method comprises, for at least one column of the geological model:

/e/ determining a value of expectation of height of liquid hydrocarbon for said column, according to claim 1;
/f/ determining a value of variance of height of liquid hydrocarbon for said column analytically according to the sum determined in the step /e/.

7. Method according to claim 6, wherein, the values of the proportion cubes for two different cells of the model and for different architectural elements are considered independently between them.

8. Method according to one of claims 6 or 7, wherein, the method further comprises:

/g/ receiving a correlogram $p(A, \Delta z)$ according to a direction of said column for said facies A in a given architectural element;

/h/ determining the expectation of the product of the presence of the facies A in said architectural element in a mesh c1 by the presence of the facies A in said architectural element in a mesh c2, with the distance between c1 and c2 according to said direction of the correlogram being $\Delta z$, with the probability of the presence of the facies A of said architectural element for the mesh c1 being $p_{A,AE,c1}$, with the probability of the presence of the facies A of said architectural element for the mesh c2 being $p_{A,AE,c2}$, according to:

$$\left(1 - \rho(A, \Delta z)\right) \cdot \left(Esp\left(p_{A,AE,c1}\right) \cdot Esp\left(p_{A,AE,c2}\right) + \sqrt{Var\left(p_{A,AE,c1}\right) \cdot Var\left(p_{A,AE,c2}\right)}\right)$$

$$+ \rho(A, \Delta z) \cdot \left(\frac{1}{2} Esp\left(p_{A,AE,c1}\right) + \frac{1}{2} Esp\left(p_{A,AE,c2}\right)\right)$$

wherein, the determination of the step /f/ is according to the determination of the step /h/.

9. Device for determining a map of expectation of height of liquid hydrocarbon in a geological model, with the geological model comprising meshes able to be associated with a facies among a plurality of facies and with an architectural element among a plurality of architectural elements,
   the device comprises, for at least one column of the geological model:

   /a/ an interface for receiving an apportionment cube of architectural element for each architectural element AE among the plurality of architectural elements, with the apportionment cube describing for each mesh c of the model the probability $p_{AE}(c)$ that said mesh belongs to said architectural element,
   /b/ an interface for the receiving a proportion cube for each facies among the plurality of facies and for each architectural element among the plurality of architectural elements, with the proportion cube associated with a facies A and with an architectural element AE describing for each mesh c of the model the proportion of said facies in said mesh if said mesh belongs to said architectural element AE, with said proportion being a random variable of triangular distribution defined by a minimum value $p_{A,AE,min}(c)$, a maximum value $p_{A,AE,max}(c)$, and a mode $p_{A,AE,mode}(c)$,
   /c/ a circuit for the determining, for each mesh c of said column and for each facies A of the plurality of facies, the sum over the plurality of architectural elements of

   $$p_{AE}(c) . \frac{1}{3} \left(p_{A,AE,min}(c) + p_{A,AE,max}(c) + p_{A,AE,mode}(c)\right).$$

   /d/ a circuit for the determining of a value of expectation of height of liquid hydrocarbon for said column analytically according to the sum determined by the circuit /c/ for each mesh c of said column and for each facies A.

10. Computer program product comprising instructions for the implementing of the method according to one of claims 1 to 8, when this program is executed by a processor.

**FIG. 1a**

**FIG. 1b**

FIG. 2a

EP 3 146 367 B1

FIG. 2b

FIG. 3

FIG. 4

FIG. 5c

FIG. 5d

FIG. 5a
Esp (HUPHISO)

FIG. 5b
Var (HUPHISO)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **T. CHARLES et al.** Expérience with the Quantification of Subsurface Uncertainties. *SPE Asia Pacific Oil and Gas Conférence and Exhibition,* 17 Avril 2001